# EUROPÄISCHE PATENTSCHRIFT

(11) **EP 3 024 618 B1**
(45) Veröffentlichungstag und Bekanntmachung des Hinweises auf die Patenterteilung: **31.03.2021**
(21) Anmeldenummer: 14727771.9
(22) Anmeldetag: 22.05.2014
(51) Int. Cl.: B23K 37/04, B21D 28/10, B21D 43/28, B21D 28/06, B21D 45/00, B23K 26/08

(54) **VERFAHREN UND MASCHINELLE VORRICHTUNG ZUM ABFÜHREN EINES WERKSTÜCKAUSSCHNITTS VON EINER SCHNEIDEINHEIT EINER WERKZEUGMASCHINE SOWIE FERTIGUNGSVERFAHREN UND MASCHINELLE ANORDNUNG FÜR DIE FERTIGUNG**
METHOD AND MECHANICAL DEVICE FOR REMOVING A WORKPIECE CUTOUT FROM A CUTTING UNIT OF A MACHINE TOOL, AND MANUFACTURING METHOD AND MECHANICAL ARRANGEMENT FOR MANUFACTURING
PROCÉDÉ ET DISPOSITIF MÉCANISÉ POUR ÉVACUER UNE TRANCHE DE PIÈCE D'UNE UNITÉ DE COUPE D'UNE MACHINE-OUTIL AINSI QUE PROCÉDÉ DE FABRICATION ET ARRANGEMENT MÉCANISÉ POUR LA FABRICATION

(30) Priorität: 23.07.2013 WO PCT/EP2013/002180
(43) Veröffentlichungstag der Anmeldung: 01.06.2016
(73) Patentinhaber: Trumpf Werkzeugmaschinen GmbH + Co. KG, 71254 Ditzingen (DE)
(72) Erfinder: BÜTTNER, Stefan, 87730 Bad Grönenbach (DE)
(74) Vertreter: Kohler Schmid Möbus Patentanwälte
(86) Internationale Anmeldenummer: PCT/EP2014/060580
(87) Internationale Veröffentlichungsnummer: WO 2015/010807

(56) Entgegenhaltungen:
- EP-A1- 1 967 301
- JP-A- 2004 042 071

## Beschreibung

Die Erfindung betrifft ein Fertigungsverfahren,
- im Rahmen dessen mittels einer Schneideinheit einer Werkzeugmaschine aus einem insbesondere plattenartigen Werkstück, vorzugsweise aus einem Blech, zusätzlich zu einem als erster Werkstückausschnitt vorgesehenen Werkstückausschnitt zumindest ein zweiter Werkstückausschnitt ausgetrennt und dabei von einem Restwerkstück des Werkstücks abschließend freigeschnitten wird,
- wobei zum Austrennen des zweiten Werkstückausschnitts aus dem Werkstück der freigeschnittene erste Werkstückausschnitt von der Schneideinheit der Werkzeugmaschine maschinell abgeführt wird, indem der freigeschnittene erste Werkstückausschnitt und das Restwerkstück mit einer gemeinsamen Abfuhrbewegung relativ zu der Schneideinheit der Werkzeugmaschine bewegt werden, wobei der freigeschnittene erste Werkstückausschnitt während der gemeinsamen Abfuhrbewegung des freigeschnittenen ersten Werkstückausschnitts und des Restwerkstücks an einer Haltevorrichtung festgelegt ist und mittels der Haltevorrichtung relativ zu dem Restwerkstück positioniert wird.

Die Erfindung betrifft des Weiteren eine maschinelle Anordnung für die Fertigung,
- mit einer Werkzeugmaschine, die eine Schneideinheit aufweist, welche aus einem insbesondere plattenartigen Werkstück, vorzugsweise aus einem Blech, zusätzlich zu einem als erster Werkstückausschnitt vorgesehenen Werkstückausschnitt einen zweiten Werkstückausschnitt austrennt und dabei von einem Restwerkstück des Werkstücks abschließend freischneidet,
- mit einer maschinellen Vorrichtung zum Abführen des freigeschnittenen ersten Werkstückausschnitts von der Schneideinheit der Werkzeugmaschine, wobei die maschinelle Vorrichtung zum Abführen des freigeschnittenen ersten Werkstückausschnitts den freigeschnittenen ersten Werkstückausschnitt und das Restwerkstück mit einer gemeinsamen Abfuhrbewegung relativ zu der Schneideinheit der Werkzeugmaschine bewegt sowie
- mit einer Haltevorrichtung der maschinellen Vorrichtung zum Abführen des freigeschnittenen ersten Werkstückausschnitts, wobei die Haltevorrichtung den freigeschnittenen ersten Werkstückausschnitt während der gemeinsamen Abfuhrbewegung des freigeschnittenen ersten Werkstückausschnitts und des Restwerkstücks festlegt und wobei die Haltevorrichtung den freigeschnittenen ersten Werkstückausschnitt während der gemeinsamen Abfuhrbewegung des freigeschnittenen ersten Werkstückausschnitts und des Restwerkstücks relativ zu dem Restwerkstück positioniert.

Gattungsgemäßer Stand der Technik ist bekannt aus JP 2004 042071 A. Diese Druckschrift offenbart eine Fertigungsanlage mit einer Revolverstanzmaschine für die schneidende Blechbearbeitung und mit einer neben der Revolverstanzmaschine angeordneten Automatisierungseinheit. Die Automatisierungseinheit umfasst eine Transfervorrichtung, mittels derer die Revolverstanzmaschine mit zu bearbeitenden Rohblechen beschickt wird und die zusätzlich dazu dient, bei der Bearbeitung eines Rohblechs freigeschnittene Fertigteile aus einem bei der Blechbearbeitung außerdem erzeugten Restgitter zu entnehmen und zu einer abseits der Revolverstanzpresse angeordneten Fertigteilablage zu verbringen. Zur Fixierung des Rohblechs und der Fertigteile ist die Transfervorrichtung mit einem Saugerrahmen versehen, der in einer horizontalen Ebene verfahren und in senkrechter Richtung angehoben und abgesenkt werden kann. Die Revolverstanzmaschine weist zur schneidenden Blechbearbeitung einen Stanzkopf sowie eine zusätzliche Stanzvorrichtung auf. Zu Bearbeitungszwecken wird das betreffende Rohblech mittels einer Koordinatenführung der Revolverstanzmaschine relativ zu dem Stanzkopf und der zusätzlichen Stanzvorrichtung bewegt. Dabei wird ein Fertigteil zunächst mittels des Stanzkopfs der Revolverstanzmaschine bis auf eine Restverbindung aus dem Rohblech freigeschnitten. Die Restverbindung zwischen dem Fertigteil und dem nun außerdem vorliegenden und an der Koordinatenführung festgelegten Restgitter wird dann an der zusätzlichen Stanzvorrichtung der Revolverstanzmaschine mit einem abschließenden Trennhub entfernt. Das vollständig freigeschnittene Fertigteil ist an dem auf das Fertigteil abgesenkten Saugerrahmen der Transfervorrichtung, das Restgitter ist weiterhin an der Koordinatenführung fixiert. Durch eine synchrone horizontale Verfahrbewegung des Saugerrahmens und der Koordinatenführung werden das Fertigteil und das Restgitter gemeinschaftlich aus dem Nahbereich der zusätzlichen Stanzvorrichtung in eine Position bewegt, in welcher das Fertigteil mit einer senkrechten Bewegung des Saugerrahmens aus dem Restgitter entnommen werden kann. In der beschriebenen Weise können an der vorbekannten Fertigungsanlage mehrere Fertigteile nacheinander aus einem Rohblech ausgestanzt und aus dem Nahbereich der zusätzlichen Stanzvorrichtung der Revolverstanzmaschine abgeführt werden.

Weiterer Stand der Technik ist offenbart in EP 1 967 301 A1. Diese Druckschrift beschreibt eine maschinelle Anordnung zum Bearbeiten von plattenartigen Werkstücken, insbesondere von Blechen, die eine Werkstück-Handiingvorrichtung sowie eine Bearbeitungseinrichtung umfasst. Mittels der Handlingvorrichtung wird ein zu bearbeitendes Werkstück nahe der Bearbeitungseinrichtung abgelegt. Anschließend wird das Werkstück von einer Koordinatenführung der maschinellen Anordnung übernommen und zur schneidenden Bearbeitung relativ zu der Bearbeitungseinrichtung bewegt. Bei der Werkstückbearbeitung werden Fertigteile von einem Restgitter des Werkstücks freigeschnitten. Die Fertigteile werden entweder unmittelbar nach dem Freischneiden von der Handlingvorrichtung aus dem Restgitter entnommen oder zunächst mittels der Koordinatenführung gemeinsam mit dem Restgitter in unmittelbarer Nähe der Bearbeitungseinrichtung in eine Position bewegt, in weicher sie für die Entnahme durch die Handlingvorrichtung zugänglich sind. Die Weglänge, über welche die Fertigteile und das Restgitter von der Koordinatenführung der maschinellen Anordnung gemeinsam bewegt werden, ist gegebenenfalls sehr kurz bemessen. Dies soll verhindern, dass die Fertigteile bei der Abfuhrbewegung gegenüber dem Restgitter derart fehlausgerichtet werden, dass die spätere Entnahme der Fertigteile von dem Restgitter erschwert oder sogar gänzlich unmöglich wird. Um eine Entnahme der Fertigteile in unmittelbarer Nähe der Bearbeitungseinrichtung zu ermöglichen, sind an der vorbekannten Handlingvorrichtung besondere konstruktive Maßnahmen vorgesehen.

Die Aufgabe der vorliegenden Erfindung besteht darin, den beschriebenen Stand der Technik dahingehend weiterzubilden, dass Werkstückausschnitte zeitlich optimiert mittels einer Schneideinheit von einem Restwerkstück freigeschnitten und gemeinsam mit dem Restwerkstück auch über größere Weglängen funktionssicher von der Schneideinheit abgeführt werden können.

Erfindungsgemäß gelöst wird diese Aufgabe durch das Verfahren nach dem unabhängigen Patentanspruch 1 sowie die Vorrichtung nach dem unabhängigen Patentanspruch 10.

Im Falle der Erfindung ergibt sich ein zeitoptimierter Prozessablauf, indem der erste Werkstückausschnitt und der zweite Werkstückausschnitt mittels der Schneideinheit der Werkzeugmaschine teilweise von dem Restwerkstück getrennt werden, anschließend beide Werkstückausschnitte an einer Haltevorrichtung festgelegt werden und der erste Werkstückausschnitt und der zweite Werkstückausschnitt danach abschließend freigeschnitten werden, wobei der freigeschnittene erste Werkstückausschnitt und das Restwerkstück vor dem abschließenden Freischneiden des zweiten Werkstückausschnitts mit einer gemeinsamen Abfuhrbewegung relativ zu der Schneideinheit der Werkzeugmaschine bewegt werden. Im Interesse einer hohen Prozesssicherheit sind die beiden Werkstückausschnitte dabei vorzugsweise ununterbrochen an der Haltevorrichtung fixiert.

Um einen zweiten Werkstückausschnitt aus dem Werkstück auszutrennen, werden der freigeschnittene erste Werkstückausschnitt und das Restwerkstück mit einer gemeinsamen Abfuhrbewegung relativ zu der Schneideinheit der Werkzeugmaschine bewegt. In Folge der Festlegung des ersten Werkstückausschnitts an der Haltevorrichtung und der durch die Haltevorrichtung bewirkten Positionierung des ersten Werkstückausschnitts relativ zu dem Restwerkstück ist sichergestellt, dass der erste Werkstückausschnitt bei der für das Austrennen des weiteren Werkstückausschnitts auszuführenden Abfuhrbewegung gegenüber dem gemeinsam mit dem ersten Werkstückausschnitt bewegten Restwerkstück derart angeordnet ist, dass die Abfuhrbewegung des ersten Werkstückausschnitts und des Restwerkstücks funktionssicher ausgeführt werden kann. Der freigeschnittene erste Werkstückausschnitt ist während der gemeinsam mit dem Restwerkstück ausgeführten Abfuhrbewegung mit einer Solllage positioniert. Auf diese Art und Weise kann insbesondere verhindert werden, dass der freigeschnittene erste Werkstückausschnitt beim Transfer relativ zu dem Restwerkstück kippt oder verrutscht oder unter das Restwerkstück gerät.

Insbesondere wird bei der gemeinsamen Abfuhrbewegung des freigeschnittenen ersten Werkstückausschnitts und des Restwerkstücks eine Verbindung des zweiten Werkstückausschnitts mit dem Restwerkstück in bzw. unter der Schneideinheit der Werkzeugmaschine positioniert. Die genannte Verbindung wird dann durch die Schneideinheit der Werkzeugmaschine getrennt. Eventuell erfolgt dies unter mehrfachem Positionieren des zu bearbeitenden Werkstücks. Vorzugsweise lagert das zu bearbeitenden plattenartige Werkstück auf einer sich horizontal erstreckenden Werkstückauflage der Werkzeugmaschine, wobei es mittels einer Werkstückbewegungseinheit in einer horizontalen Ebene über die Werkstückauflage verfahren wird.

Im Interesse einer möglichst einfachen konstruktiven Gestaltung der maschinellen Vorrichtung empfiehlt es sich, zum Festlegen des ersten Werkstückausschnitts vor dem abschließenden Freischneiden diejenige Haltevorrichtung zu nutzen, mittels derer der freigeschnittene erste Werkstückausschnitt bei der sich an das abschließende Freischneiden anschließenden Abfuhrbewegung relativ zu dem Restwerkstück positioniert wird.

Von besonderem Vorteil ist es, wenn die Haltevorrichtung mehrere, vorzugsweise magnetische und/oder unterdruckbetriebene Werkstückhalteeinheiten zum Festlegen von freigeschnittenen Werkstückausschnitten aufweist. Vakuumsaugereinheiten sind für die Handhabung von plattenartigen Werkstücken bzw. für die Handhabung ausgeschnittener Fertigteile und Restwerkstücke besonders geeignet. Sind die Werkstückhalteeinheiten einzeln und/oder gruppenweise aktivier- und deaktivierbar, so besteht die Möglichkeit, sämtliche Werkstückhalteeinheiten an dem plattenartigen Werkstück bzw. dem oder den freigeschnittenen Werkstückausschnitten und dem Restwerkstück anzulegen, aber nur diejenigen Werkstückhalteeinheiten in den Funktionszustand zu überführen, die an einem zu fixierenden Werkstückausschnitt oder Restwerkstück angeordnet sind.

Die Werkstückausschnitte bereits vor dem abschließenden Freischneiden an einer Haltevorrichtung festzulegen, ist insbesondere bei der Bearbeitung von dünnen Werkstücken von Vorteil, da hier die Gefahr besteht, dass die Werkstückausschnitte mit dem Freischneiden von dem Restwerkstück in einer Weise ausgerichtet werden, die ein funktionssicheres Abführen der Werkstückausschnitte von der Schneideinheit der Werkzeugmaschine erschwert oder sogar unmöglich macht. Etwa beim Laserschneiden von dünnen Blechen kann sich eine derartige Fehlausrichtung der freigeschnittenen Werkstückausschnitte in Folge der Beaufschlagung der Werkstückausschnitte durch einen Schneidgasstrahl ergeben.

Besondere Ausführungsarten der Erfindung gemäß den unabhängigen Patentansprüchen ergeben sich aus den abhängigen Patentansprüchen 2 bis 9 und 11 bis 14.

In bevorzugter Ausgestaltung des erfindungsgemäßen Fertigungsverfahrens werden ausweislich Patentanspruch 2 der erste Werkstückausschnitt und der zweite Werkstückausschnitt vor dem abschließenden Freischneiden des ersten Werkstückausschnitts mittels der Schneideinheit der Werkzeugmaschine derart von dem Restwerkstück teilweise getrennt, dass nach dem abschließenden Freischneiden des ersten Werkstückausschnitts der freigeschnittene erste Werkstückausschnitt und das Restwerkstück zum Freischneiden des zweiten Werkstückausschnitts nur entlang einer geradlinigen Bewegungsachse mit einer gemeinsamen Abfuhrbewegung relativ zu der Schneideinheit der Werkzeugmaschine bewegt werden müssen. Dank dieses Verfahrensmerkmals ist es ausreichend, wenn die Haltevorrichtung, an welcher der erste Werkstückausschnitt und gegebenenfalls auch der zweite Werkstückausschnitt festgelegt sind, entlang einer geradlinigen Bewegungsachse antreibbar ist, bzw. nur entlang einer geradlinigen Bewegungsachse abgestimmt auf eine Werkstückbewegungseinheit, insbesondere synchron mit dieser, bewegt werden kann. Vorzugsweise verläuft diese Bewegungsachse senkrecht zu demjenigen Teil eines Maschinengestells der mit der Schneideinheit versehenen Werkzeugmaschine, an welchem die Schneideinheit der Werkzeugmaschine angeordnet ist. Dadurch kann bei der gemeinsamen Abfuhrbewegung des oder der freigeschnittenen Werkstückausschnitte und des Restwerkstücks eine Kollision zwischen der Haltevorrichtung und dem Maschinengestell der Werkzeugmaschine auf relativ einfache Art und Weise vermieden werden.

Damit der erste freigeschnittene Werkstückausschnitt durch die Haltevorrichtung fixiert werden kann, wenn der zweite Werkstückausschnitt freigeschnitten wird, ist erfindungsgemäß vorgesehen, dass die Haltevorrichtung zumindest teilweise entlang wenigstens einer insbesondere geradlinigen Bewegungsachse an der Schneideinheit der Werkzeugmaschine vorbeibewegt werden kann. Aus baulichen Gründen ist es von Vorteil, wenn die genannte lineare Bewegungsachse senkrecht zu demjenigen Teil des Maschinengestells der Werkzeugmaschine verläuft, an welchem die Schneideinheit der Werkzeugmaschine angebracht ist.

Gemäß Patentanspruch 3 ist eine weitere Variante des erfindungsgemäßen Fertigungsverfahrens dadurch gekennzeichnet, dass der freigeschnittene zweite Werkstückausschnitt von der Schneideinheit der Werkzeugmaschine maschinell abgeführt wird, indem der freigeschnittene zweite Werkstückausschnitt und das Restwerkstück mit einer gemeinsamen Abfuhrbewegung relativ zu der Schneideinheit der Werkzeugmaschine bewegt werden, wobei der freigeschnittene zweite Werkstückausschnitt während der gemeinsamen Abfuhrbewegung des freigeschnittenen zweiten Werkstückausschnitts und des Restwerkstücks an einer Haltevorrichtung festgelegt ist und mittels der Haltevorrichtung relativ zu dem Restwerkstück positioniert wird.

Im Falle des erfindungsgemäßen Verfahrens gemäß Patentanspruch 4 wird der zweite Werkstückausschnitt an derjenigen Haltevorrichtung festgelegt, an welcher der freigeschnittene erste Werkstückausschnitt während der gemeinsamen Abfuhrbewegung des freigeschnittenen ersten Werkstückausschnitts und des Restwerkstücks festgelegt ist. In Folge der Doppelnutzung der Haltevorrichtung erübrigt sich eine separate Haltevorrichtung für den zweiten Werkstückausschnitt (Patentanspruch 12).

Um die mit der Entnahme des ersten Werkstückausschnitts und des zweiten Werkstückausschnitts von dem Restwerkstück verbundene Stillstandszeit der Werkzeugmaschine zu minimieren, ist gemäß Patentanspruch 5 in weiterer bevorzugter Ausgestaltung des erfindungsgemäßen Verfahrens vorgesehen, dass der erste Werkstückausschnitt und der zweite Werkstückausschnitt nach dem abschließenden Freischneiden gemeinsam von dem Restwerkstück entnommen werden. Zunächst wird der erste Werkstückausschnitt von dem Restwerkstück freigeschnitten und gemeinsam mit dem Restwerkstück von der Schneideinheit der Werkzeugmaschine abgeführt, damit der zweite Werkstückausschnitt von dem Restwerkstück abschließend freigeschnitten werden kann. Während der zweite Werkstückausschnitt abschließend freigeschnitten wird, ist der erste freigeschnittene Werkstückausschnitt an der Haltevorrichtung festgelegt. Der erste freigeschnittene Werkstückausschnitt wird also nicht vor dem abschließenden Freischneiden des zweiten Werkstückausschnitts von dem Restwerkstück entnommen. Infolgedessen entfällt ein Entnahmevorgang nur für den ersten Werkstückausschnitt und damit auch die mit einem derartigen Entnahmevorgang verbundene Maschinenstillstandszeit. Die erfindungsgemäße Fertigungsvorrichtung zeichnet sich folglich durch eine hohe Produktivität aus.

Als Entnahmevorrichtung kann dabei insbesondere die Haltevorrichtung genutzt werden, die ansonsten während der gemeinsamen Abfuhrbewegung des freigeschnittenen Werkstückausschnitts und des Restwerkstücks den Werkstückausschnitt gegenüber dem Restwerkstück positioniert

Aus räumlichen Gründen hat es sich bei der Bearbeitung von plattenartigen Werkstücken bewährt, dass der freigeschnittene Werkstückausschnitt mit seiner Oberseite an der Entnahmevorrichtung festgelegt wird und dass die Entnahmevorrichtung den freigeschnittenen Werkstückausschnitt nach oben von dem Restwerkstück entnimmt und/oder von einer Werkstückauflage der Werkzeugmaschine abführt.

Gemäß Patentanspruch 6 ist in bevorzugter Ausgestaltung der Erfindung vorgesehen, dass die Haltevorrichtung nicht nur zur Positionierung des freigeschnittenen ersten Werkstückausschnitts gegenüber dem Restwerkstück dient sondern darüber hinaus auch die Abfuhrbewegung des freigeschnittenen ersten Werkstückausschnitts erzeugt.

Im Interesse einer maximalen Funktionssicherheit des Abfuhrprozesses ist ausweislich Patentanspruch 7 vorgesehen, dass der freigeschnittene erste Werkstückausschnitt bei der gemeinsamen Abfuhrbewegung des freigeschnittenen ersten Werkstücksauschnitts und des Restwerkstücks mittels der Haltevorrichtung derart abgestimmt auf die Bewegung des Restwerkstücks bewegt wird, dass der freigeschnittene erste Werkstückausschnitt, zumindest wenn der zweite Werkstückausschnitt abschließend freigeschnitten wird, wenigstens nahezu diejenige Relativposition gegenüber dem Restwerkstück einnimmt, in welcher er vor seinem abschließenden Freischneiden von dem Restwerkstück angeordnet ist.

Das Restwerkstück kann bei der gemeinsamen Abfuhrbewegung des oder der freigeschnittenen Werkstückausschnitte und des Restwerkstücks mittels der zur Fixierung und gegebenenfalls auch zur Bewegung des oder der Werkstückausschnitte vorgesehenen Haltevorrichtung bewegt werden. Erfindungsgemäß bevorzugt wird die Verwendung einer separaten Werkstückbewegungseinheit, welche das Restwerkstück bei der gemeinsamen Abfuhrbewegung des oder der freigeschnittenen Werkstückausschnitte und des Restwerkstücks bewegt (Patentanspruch 8). Als Werkstückbewegungseinheit kommt beispielsweise eine herkömmliche Koordinatenführung in Frage.

In Fällen, in denen der freigeschnittene erste Werkstückausschnitt und das Restwerkstück gemeinsam von der Schneideinheit der Werkzeugmaschine abgeführt werden, indem die Haltevorrichtung den freigeschnittenen ersten Werkstückausschnitt und eine von der Haltevorrichtung verschiedene Werkstückbewegungseinheit das Restwerkstück bewegt, sorgt eine numerische Steuereinheit der erfindungsgemäßen Vorrichtung dafür, dass die Bewegung der Haltevorrichtung und die Bewegung der Werkstückbewegungseinheit miteinander koordiniert sind (Patentanspruch 11). Mit Hilfe der numerischen Steuereinheit kann beispielsweise die Bewegung der Haltevorrichtung mit der Bewegung der Werkstückbewegungseinheit zwangsgekoppelt werden. Es besteht die Möglichkeit, den Antrieb der Haltevorrichtung zeitweise als eine Art synchronen Zusatzantrieb des Antriebs der Werkstückbewegungseinheit zu steuern.

Im Falle des erfindungsgemäßen Verfahrens nach Patentanspruch 9 wirkt die Haltevorrichtung zur Sollpositionierung des freigeschnittenen ersten Werkstückausschnitts gegenüber dem Restwerkstück nicht nur auf den freigeschnittenen ersten Werkstückausschnitt sondern auch auf das Restwerkstück ein.

Zur Entnahme der freigeschnittenen Werkstückausschnitte von dem Restwerkstück dient vorzugsweise die Haltevorrichtung, mittels derer die Werkstückausschnitte bei der gemeinsam mit dem Restwerkstück ausgeführten Abfuhrbewegung relativ zu dem Restwerkstück positioniert werden. Die Haltevorrichtung bildet demnach eine gemeinsame Haltevorrichtung für mehrere Werkstückausschnitte (Patentanspruch 13).

Das Restwerkstück kann nach der Entnahme der freigeschnittenen Werkstückausschnitte an der Werkzeugmaschine verbleiben, damit beispielsweise weitere Werkstückausschnitte von dem Restwerkstück freigeschnitten werden können. Es besteht aber auch die Möglichkeit, das Restwerkstück gemeinsam mit den freigeschnittenen Werkstückausschnitten aus der Werkzeugmaschine zu entnehmen.

Die aufgrund einer Reduzierung von Maschinenstillstandszeiten bestehenden Vorteile der Erfindung kommen umso mehr zum Tragen, je mehr Werkstückausschnitte gemeinsam von dem Restwerkstück entnommen werden. Vor diesem Hintergrund wird in weiterer Ausgestaltung der Erfindung vor der Entnahme des freigeschnittenen ersten Werkstückausschnitts und des freigeschnittenen zweiten Werkstückausschnitts wenigstens ein weiterer Werkstückausschnitt von dem Restwerkstück abschließend freigeschnitten. Der weitere Werkstückausschnitt wird dann gemeinsam mit dem freigeschnittenen ersten Werkstückausschnitt und dem freigeschnittenen zweiten Werkstückausschnitt von dem Restwerkstück entnommen.

Um zu vermeiden, dass eine gegenseitige Abweichung der bei der gemeinsamen Abfuhrbewegung einerseits von dem oder den freigeschnittenen Werkstückausschnitten und andererseits von dem Restwerkstück ausgeführten Bewegungen zu einer Fehlausrichtung, beispielsweise einem Verkanten des oder der freigeschnittenen Werkstückausschnitte gegenüber dem Restwerkstück führen, ist es von Vorteil, dass der oder die freigeschnittenen Werkstückausschnitte mittels der Haltevorrichtung mit einem in einer Hauptebene des plattenartigen Werkstücks relativ zu dem Restwerkstück bestehenden Bewegungsspiel festlegbar ist oder sind (Patentanspruch 14). Beispielsweise kann ein Schleppfehler des als Zusatzantrieb angesteuerten Antriebs der Haltevorrichtung durch das Bewegungsspiel ausgeglichen werden. Ein derartiges Bewegungsspiel kann sich bei Verwendung von Vakuumsaugern als Werkstückhalteeinheiten der Haltevorrichtung auf einfache Art und Weise dann ergeben, wenn die Saugermanschetten der Vakuumsauger elastisch sind.

Nachfolgend wird die Erfindung anhand beispielhafter schematischer Darstellungen näher erläutert. Es zeigen:
- Figur 1:: eine Fertigungsanlage erster Bauart für die Blechfertigung mit einer Stanzmaschine und einer Be- und Entladevorrichtung,
- Figuren 2 bis 5:: Darstellungen zur Veranschaulichung der Funktionsweise der Fertigungsanlage gemäß Figur 1,
- Figur 6:: die Fertigungsanlage gemäß den Figuren 1 bis 5 mit einer modifizierten Be- und Entladevorrichtung,
- Figuren 7, 8:: eine Fertigungsanlage zweiter Bauart für die Blechfertigung mit einer Laserschneidmaschine und einer Entladevorrichtung und

- Figuren 9 bis 11:: Darstellungen zur Veranschaulichung der Funktionsweise der Fertigungsanlage gemäß den Figuren 7, 8.

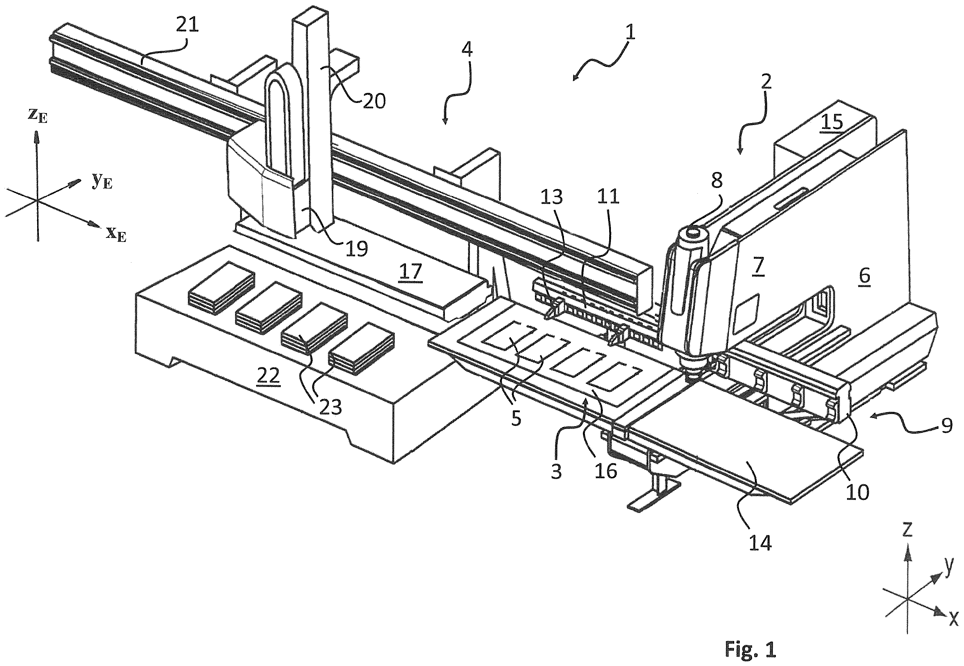

Gemäß Figur 1 umfasst eine als maschinelle Anordnung für die Blechfertigung vorgesehene Fertigungsanlage 1 als Werkzeugmaschine eine Stanzmaschine 2 zur schneidenden Bearbeitung von plattenartigen Werkstücken in Form von Blechtafeln 3 sowie eine maschinelle Be- und Entladevorrichtung 4, mittels derer die Stanzmaschine 2 mit zu bearbeitenden Blechtafeln 3 beschickt werden kann und die außerdem genutzt wird, um aus einer Blechtafel 3 freigeschnittene Werkstückausschnitte 5 von der Stanzmaschine 2 abzuführen.

Die Stanzmaschine 2 weist einen C-förmigen Maschinenrahmen 6 auf, mit einem oberen Rahmenschenkel 7, an dem als Schneideinheit der Stanzmaschine 2 ein Stanzkopf 8 angebracht ist. Ein unterer Rahmenschenkel des Maschinenrahmens 6 ist in Figur 1 verdeckt. In den Stanzkopf 8 kann ein einzelnes Stanzwerkzeug aus einem Werkzeugmagazin eingewechselt werden. Das Werkzeugmagazin befindet sich an einer Werkstückbewegungseinheit 9, ist aus Gründen der Übersichtlichkeit aber nicht gezeigt. Bei der Werkstückbewegungseinheit 9 handelt es sich um eine Koordinatenführung üblicher Bauart.

Anstelle der Stanzmaschine 2 kann die Fertigungsanlage 1 auch mit einer andersartigen Werkzeugmaschine zum Austrennen von Werkstückausschnitten aus einem plattenartigen Werkstück ausgestattet sein. Als Alternative zu der Stanzmaschine 2 denkbar ist insbesondere eine Laserschneidmaschine oder eine Laserschneid-/Stanz-Kombimaschine.

Die Werkstückbewegungseinheit 9 der Stanzmaschine 2 umfasst einen Querträger 10, der zusammen mit einer Längsschiene 11 entlang einer geradlinigen horizontalen Bewegungsachse (y-Achse) relativ zu dem C-förmigen Maschinenrahmen 6 verfahren kann. Die y-Achse verläuft parallel zu den Rahmenschenkeln des Maschinenrahmens 6. Die Bewegungen des Querträgers 10 und der Längsschiene 11 in y-Richtung werden mit Hilfe eines motorischen y-Antriebs der Werkstückbewegungseinheit 9 erzeugt.

Die Längsschiene 11 ist an dem Querträger 10 längs einer zweiten horizontalen Bewegungsachse (x-Achse) beweglich geführt. Die x-Achse verläuft senkrecht zu der y-Achse und damit auch senkrecht zu den Rahmenschenkeln des Maschinenrahmens 6. Zur Erzeugung der Bewegungen der Längsschiene 11 in x-Richtung dient ein motorischer x-Antrieb der Werkstückbewegungseinheit 9.

Die Längsschiene 11 ist mit zwei als Werkstückhalter dienenden Spannpratzen 13 versehen, die einen Rand der Blechtafel 3 ergreifen können. Die Blechtafel 3 lagert auf einem Werkstücktisch 14. Mittels des x-Antriebs und des y-Antriebs der Werkstückbewegungseinheit 9 kann die Blechtafel 3 auf dem Werkstücktisch 14 in einer horizontalen Ebene relativ zu dem Stanzkopf 8 bewegt bzw. positioniert werden. Die Antriebe der Werkstückbewegungseinheit 9 werden mittels einer numerischen Steuereinheit 15 der Fertigungsanlage 1 gesteuert.

Die maschinelle Be- und Entladevorrichtung 4 ist neben der Stanzmaschine 2 aufgestellt. Mittels der Be- und Entladevorrichtung 4 können Werkstückausschnitte 5 direkt vom Werkstücktisch 14 und einem dort als Restwerkstück abgelegten Restgitter 16 entnommen werden. Nachdem die Be- und Entladevorrichtung 4 der Fertigungsanlage 1 seitlich neben der Stanzmaschine 2 angeordnet, bleiben die übrigen Seiten der Stanzmaschine 2 für das Bedienpersonal zugänglich und/oder stehen für die Anbindung anderer Automatisierungskomponenten zur Verfügung.

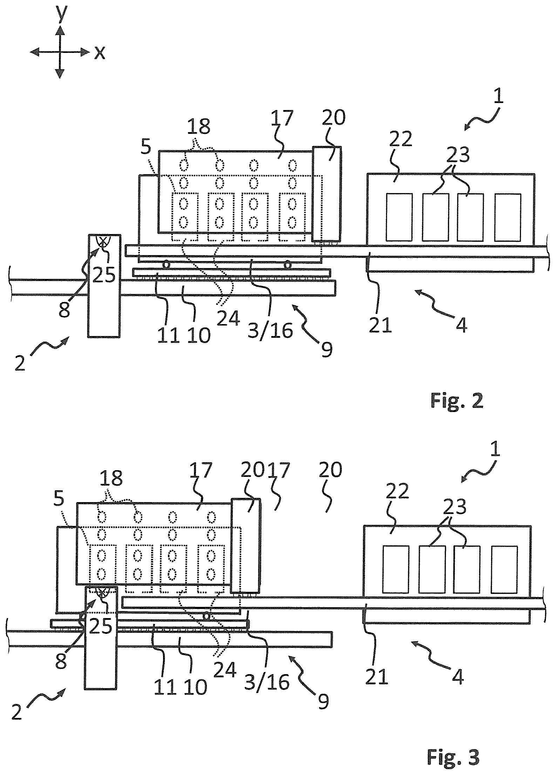

Die Be- und Entladevorrichtung 4 weist einen Saugerrahmen 17 auf, an dessen Unterseite ein Saugerfeld mit einer Vielzahl von unterdruckbetriebenen Werkstückhalteeinheiten in Form von Vakuumsaugern 18 angeordnet ist. Alternativ können beispielsweise auch magnetische Werkstückhalteeinheiten verwendet werden. In den Figuren 2 bis 5 sind die Vakuumsauger 18 schematisch dargestellt.

Der Saugerrahmen 17 ist an einer Hubeinheit 19 angebracht, die ihrerseits an einem Längsschlitten 20 der Be- und Entladevorrichtung 4 entlang einer vertikalen Bewegungsachse (z_{E}-Achse) bewegbar gelagert ist. Der Längsschlitten 20 kann an einem Träger 21 der Be- und Entladevorrichtung 4 entlang einer horizontalen Bewegungsachse (x_{E}-Achse) verfahren. Die x_{E}-Achse der Be- und Entladevorrichtung 4 verläuft parallel zur x-Achse der Werkstückbewegungseinheit 9. Der Träger 21 ragt an dem der Stanzmaschine 2 zugewandten Ende über den Werkstücktisch 14 und reicht bis in die Nähe des Stanzkopfs 8 der Stanzmaschine 2.

Zur Bewegung des Saugerrahmens 17 weist die Be- und Entladevorrichtung 4 einen x_{E}-Antrieb sowie einen z_{E}-Antrieb auf. Auch der x_{E}-Antrieb und der z_{E}-Antrieb der Be- und Entladevorrichtung 4 werden durch die numerische Steuereinheit 15 der Fertigungsanlage 1 gesteuert. Mittels der numerischen Steuereinheit 15 sind außerdem die Vakuumsauger 18 des Saugerrahmens 17 einzeln aktivier- und deaktivierbar.

Beispielhaft ist in Figur 1 ein Ablagetisch 22 gezeigt, der zur Ablage der mittels des Saugerrahmens 17 der Be- und Entladevorrichtung 4 von dem Restgitter 16 entnommenen Werkstückausschnitte 5 dient. Vier Stapel 23 von freigeschnittenen Werkstückausschnitten 5 befinden sich bereits auf dem Ablagetisch 22.

Im Folgenden wird anhand der Figuren 2 bis 5 beispielhaft ein Fertigungsverfahren beschrieben, nach welchem mehrere Werkstückausschnitte 5 aus der Blechtafel 3 ausgetrennt, von dem Stanzkopf 8 der Stanzmaschine 2 abgeführt und von dem Restgitter 16 entnommen werden. Die Figuren 2 bis 5 zeigen die Fertigungsanlage 1 gemäß Figur 1 in stark schematischer Draufsicht, wobei einige Bauteile, die für die Erläuterung der Abläufe nicht erforderlich sind, aus Übersichtlichkeitsgründen weggelassen oder nur angedeutet sind.

Gemäß Figur 2 sind vier Werkstückausschnitte 5 mittels des Stanzkopfs 8 der Stanzmaschine 2 teilweise von dem Restgitter 16 der Blechtafel 3 getrennt worden. Jeder der Werkstückausschnitte 5 ist nur noch über eine als schmaler Reststeg 24 ausgebildete Restverbindung mit der Blechtafel 3 bzw. dem Restgitter 16 verbunden. Die Werkstückausschnitte 5, aber vor allem die Reststege 24, sind entlang der x-Achse der Werkstückbewegungseinheit 9 in einer Reihe ausgerichtet. Die Blechtafel 3 ist (durch entsprechendes Verfahren der Werkstückbewegungseinheit 9) derart angeordnet, dass die Reststege 24 entlang der y-Achse auf Höhe eines Arbeitsbereichs 25 des Stanzkopfs 8 liegen. Die Blechtafel 3 muss ausgehend von dieser Position nur entlang der x-Achse verfahren werden, damit die Reststege 24 der noch nicht freigeschnittenen Werkstückausschnitte 5 nacheinander in den Arbeitsbereich 25 des Stanzkopfs 8 gelangen.

Der Saugerrahmen 17 der maschinellen Be- und Entladevorrichtung 4 befindet sich über der Blechtafel 3 und ist auf die Blechtafel 3 abgesenkt, so dass die meisten Vakuumsauger 18 des Saugerrahmens 17 auf der Oberseite der Blechtafel 3 aufliegen. Insgesamt weist der Saugerrahmen 17 sechzehn Vakuumsauger 18 auf, die in vier gleichmäßig über die Unterseite des Saugerrahmens 17 verteilten Reihen angeordnet sind und auf diese Art und Weise ein Saugerfeld des Saugerrahmens 17 bilden.

In Figur 2 sind lediglich acht Vakuumsauger 18 über den vier Werkstückausschnitten 5 angeordnet. Nur diese acht Vakuumsauger 18 sind aktiviert. An den aktivierten Vakuumsaugern 18 sind die noch nicht freigeschnittenen Werkstückausschnitte 5 festgelegt. Der Saugerrahmen 17 bildet dementsprechend eine Haltevorrichtung. Die anderen acht Vakuumsauger 18 sind deaktiviert und liegen lose auf der Oberfläche der Blechtafel 3 oder daneben.

Ausgehend von den in Figur 2 gezeigten Verhältnissen wird die Blechtafel 3 mittels der Werkstückbewegungseinheit 9 entlang der x-Achse verfahren, bis der Reststeg 24 des ersten Werkstückausschnitts 5 im Arbeitsbereich 25 des Stanzkopfs 8 zu liegen kommt. Synchron mit der Bewegung der Blechtafel 3 wird der Saugerrahmen 17 der maschinellen Be- und Entladevorrichtung 4 mittels des x_{E}-Antriebs der maschinellen Be- und Entladevorrichtung 3 entlang der x_{E}-Achse bewegt, sodass die Vakuumsauger 18 ihre Position relativ zu den Werkstückausschnitten 5 beibehalten.

Der erste Werkstückausschnitt 5 wird nun von der ruhenden Blechtafel 3 bzw. dem ruhenden Restgitter 16 abschließend freigeschnitten, indem der Stanzkopf 8 mit einem einzigen Trennhub den Reststeg 24 durchtrennt. Bei seinem abschließenden Freischneiden von dem Restgitter 16 wird der erste Werkstückausschnitt 5 mittels des als Haltevorrichtung fungierenden Saugerrahmens 17 relativ zu dem Restgitter 16 positioniert. Der abschließend freigeschnittene erste Werkstückausschnitt 5 behält folglich gegenüber dem Restgitter 16 diejenige Position bei, in welcher er sich vor dem abschließenden Freischneiden befunden hat.

An einer Fertigungsanlage, die abweichend von der Fertigungsanlage 1 ein punktuell arbeitendes Schneidwerkzeug, etwa ein Laserschneidwerkzeug aufweist, kann der Reststeg 24 auch bei bewegtem Werkstück freigeschnitten werden. Es ist außerdem denkbar, dass ein Schneidwerkzeug, insbesondere ein Laserschneidwerkzeug verwendet wird, welches in geringem Umfang relativ zu dem Maschinenrahmen in einer horizontalen Ebene bewegbar ist. In diesem Fall kann das Werkstück beim abschließenden Freischneiden eines Werkstückausschnitts ruhen, während das Schneidwerkzeug an dem Reststeg 24 entlang verfährt.

Nach dem abschließenden Freischneiden ist der erste Werkstückausschnitt 5 nicht mehr mit der übrigen Blechtafel 3 bzw. dem Restgitter 16 verbunden. Der freigeschnittene erste Werkstückausschnitt 5 lagert auf dem Werkstücktisch 14 und wird von dem Saugerrahmen 17 mittels der beiden an dem ersten Werkstückausschnitt 5 anliegenden Vakuumsauger 18 gehalten. Die sich damit ergebenden Verhältnisse sind in Figur 3 dargestellt.

Damit der zweite Werkstückausschnitt 5 abschließend freigeschnitten werden kann, werden der freigeschnittene erste Werkstückausschnitt 5 und das Restgitter 16 mit einer gemeinsamen Bewegung von dem Stanzkopf 8 der Stanzmaschine 2 abgeführt. Dabei werden das Restgitter 16 mittels der Werkstückbewegungseinheit 9 längs der x-Achse und der freigeschnittene erste Werkstückausschnitt 5 mittels des Saugerrahmens 17 längs der x_{E}-Achse bewegt. Die Bewegungen des an dem Saugerrahmen 17 festgelegten freigeschnittenen ersten Werkstückausschnitts 5 und des mittels der Spannpratzen 13 gehaltenen Restgitters 16 werden synchron ausgeführt. Der freigeschnittene erste Werkstückausschnitt 5 wird dabei mittels des Saugerrahmens 17 relativ zu dem Restgitter 16 positioniert. Infolgedessen behält der freigeschnittene erste Werkstückausschnitt 5 bei der gemeinsamen Abfuhrbewegung des freigeschnittenen ersten Werkstückausschnitts 5 und des Restgitters 16 gegenüber dem Restgitter 16 diejenige Position bei, in welcher er zu Beginn der Abfuhrbewegung und somit auch vor dem abschließenden Freischneiden von dem Restgitter 16 angeordnet war. Eine unerwünschte und die gemeinsame Abfuhrbewegung des freigeschnittenen ersten Werkstückausschnitts 5 und des Restgitters 16 behindernde Fehlausrichtung des freigeschnittenen ersten Werkstückausschnitts 5 gegenüber dem Restgitter 16, insbesondere ein Verkanten des freigeschnittenen ersten Werkstückausschnitts 5 an dem Restgitter 16, wird durch die Festlegung und Positionierung des freigeschnittenen ersten Werkstückausschnitts 5 mittels des Saugerrahmens 17 verhindert.

Dabei ist es von Vorteil, dass die Vakuumsauger 18 den freigeschnittenen ersten Werkstückausschnitte 5 mit einem gewissen, insbesondere in Richtung der x-Achse bestehenden horizontalen Bewegungsspiel halten. Kleinere Abweichungen bzw. Schleppfehler bei der Steuerung der synchronen Bewegungen der Werkstückbewegungseinheit 9 und des Saugerrahmens 17 können dadurch gegebenenfalls kompensiert werden.

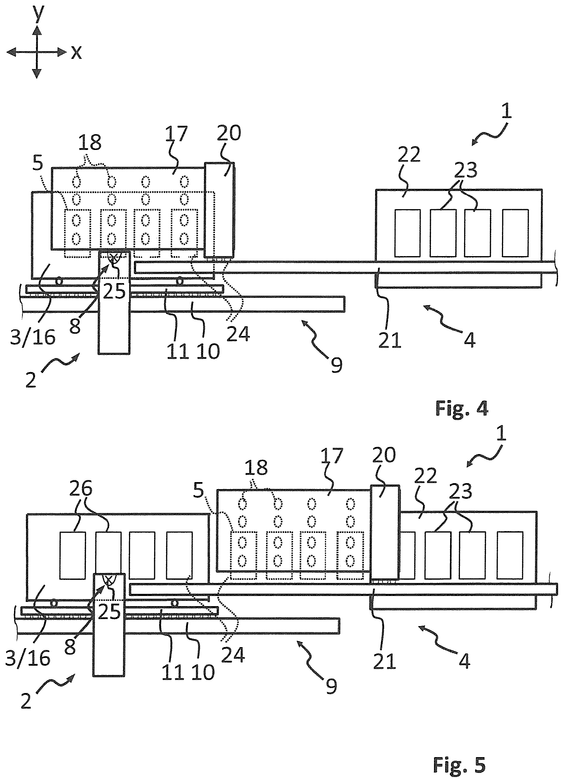

Die gemeinsame Abfuhrbewegung des freigeschnittenen ersten Werkstückausschnitts 5 und des Restgitters 16 endet, sobald der Reststeg 24 des zweiten Werkstückausschnitts 5 im Arbeitsbereich 25 des Stanzkopfs 8 angelangt ist. Durch einen Trennhub wird der zweite Werkstückausschnitt 5 abschließend freigeschnitten (Figur 4). Währenddessen wird der freigeschnittene erste Werkstückausschnitt 5 weiterhin durch die an den ersten Werkstückausschnitt 5 angelegten Vakuumsauger 18 des Saugerrahmens 17 gehalten.

Nach dem Freischneiden des ersten Werkstückausschnitts 5 und des zweiten Werkstückausschnitts 5 werden in analoger Weise die weiteren Werkstückausschnitte 5 freigeschnitten. Sämtliche Werkstückausschnitte 5 sind während und nach dem abschließenden Freischneiden von dem Restgitter 16 und auch während der gemeinsam mit dem Restgitter 16 relativ zu dem Stanzkopf 8 ausgeführten Bewegungen ununterbrochen an dem Saugerrahmen 17 festgelegt und dadurch gegenüber dem Restgitter 16 mit einer Solllage ausgerichtet.

Aus Figur 4 ist ersichtlich, dass der Saugerrahmen 17 beim abschließenden Freischneiden des zweiten Werkstückausschnitts 5 mit der linken äußeren Vakuumsaugerrreihe, von der zwei Vakuumsauger 18 den freigeschnittenen ersten Werkstückausschnitt 5 halten, den Arbeitsbereich 25 des Stanzkopfs 8 längs der x-Achse passiert hat. In entsprechender Weise müssen bei dem abschließenden Freischneiden des dritten Werkstückausschnitts 5 und des vierten Werkstückausschnitts 5 weitere Vakuumsauger 18 an dem Stanzkopf 8 vorbeibewegt werden. Ermöglicht wird dies dadurch, dass der Träger 21 der Be- und Entladevorrichtung 4 bis nahe an den Stanzkopf 8 heranreicht und der Saugerrahmen 17 in x-Richtung auskragend ausgebildet ist.

Sobald sämtliche Werkstückausschnitte 5 freigeschnitten sind, wird der Saugerrahmen 17 mittels des z_{E}-Antriebs der maschinellen Be- und Entladevorrichtung 4 geringfügig angehoben, wobei darauf geachtet wird, dass der Saugerrahmen 17 nicht mit dem Stanzkopf 8 kollidiert. Aufgrund der Hubbewegung des nunmehr als Entnahmevorrichtung genutzten Saugerrahmens 17 werden die daran festgelegten Werkstückausschnitte 5 gemeinsam aus dem Restgitter 16 nach oben ausgehoben und dadurch von dem Restgitter 16 entnommen.

Der Saugerrahmen 17 wird nun mittels des x_{E}-Antriebs der Be- und Entladevorrichtung 4 an dem Träger 21 entlang verfahren und verbringt auf diese Art und Weise alle vier Werkstückausschnitte 5 gemeinsam zu dem Ablagetisch 22. In Figur 5 ist der Saugerrahmen 17 auf dem Weg vom Stanzkopf 8 zum Ablagetisch 22 gezeigt. In dem auf dem Werkstücktisch 14 verbliebenen Restwerkstück 16 sind durch das Austrennen der Werkstückausschnitte 5 entstandene Aussparungen 26 zu erkennen.

Die Ablage der Werkstückausschnitte 5 erfolgt, indem der Saugerrahmen 17 die Werkstückausschnitte 5 entlang der x_{E}-Achse in die gewünschte Position bewegt. Im gezeigten Beispielfall sind bereits vier Ablagestapel 23 vorhanden, über welchen die Werkstückausschnitte 5 positioniert werden. Dann wird der Saugerrahmen 17 abgesenkt, bis jeder der Werkstückausschnitte 5 auf einem Stapel 23 liegt. Die zuvor aktivierten Vakuumsauger 18 werden nun deaktiviert, sodass sich die Werkstückausschnitte 5 von den Vakuumsaugern 18 lösen können.

Da im Rahmen des beschriebenen Verfahrens mehrere freigeschnittene Werkstückausschnitte 5 gemeinsam aus der Stanzmaschine 2 entnommen werden, reduziert sich die mit der Entnahme der Werkstückausschnitte 5 verbundene Stillstandszeit der Stanzmaschine 2 im Vergleich mit einer Einzelentnahme der Werkstückausschnitte 5 erheblich. Vorteilhafterweise können in dem vorliegenden Beispielsfall sämtliche Werkstückausschnitte 5 der Blechtafel 3 gemeinsam entnommen werden. Dank der konstruktiven Gestaltung der Be- und Entladevorrichtung 4 ist auch die gemeinsame Entnahme relativ großer Werkstückausschnitte 5 möglich.

Sämtliche beschriebenen Bewegungen werden mittels der hierfür vorgesehenen Antriebe durchgeführt, die ihrerseits durch die numerische Steuereinheit 15 gesteuert sind. Insbesondere kann mittels der numerischen Steuereinheit 15 der x_{E}-Antrieb der Be- und Entladevorrichtung 4 zeitweise als Zusatzantrieb des x-Antriebs der Werkstückbewegungseinheit 9 und zeitweise als eigenständiger Antrieb gesteuert werden.

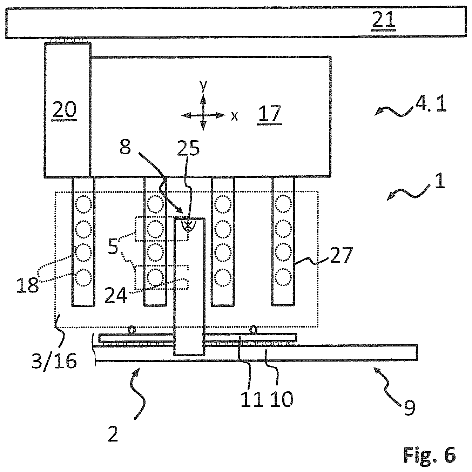

Eine Fertigungsanlage 1 mit einer Stanzmaschine 2 und einer Be- und Entladevorrichtung 4.1 zur gemeinsamen Entnahme von Werkstückausschnitten 5 aus der Stanzmaschine 2 ist in Figur 6 dargestellt. Für gleiche Bauteile werden in Figur 6 dieselben Bezugszeichen verwendet wie in den Figuren 1 bis 5.

Abweichend von der Fertigungsanlage 1 gemäß den Figuren 1 bis 5 ist der Träger 21 der Be- und Entladevorrichtung 4.1 mit Abstand in y-Richtung vor dem Stanzkopf 8 angeordnet. Ein weiterer Unterschied zu den Verhältnissen gemäß den Figuren 1 bis 5 besteht darin, dass die Vakuumsauger 18 der Be- und Entladevorrichtung 4.1 an der Unterseite von Streben 27 des Saugerrahmens 17 befestigt sind, die ihrerseits mittels eines y_{E}-Antriebs der Be- und Entladevorrichtung 4.1 längs einer y_{E}-Achse verschoben werden können. Die y_{E}-Achse verläuft senkrecht zu dem Träger 21 und parallel zu der y-Achse der Werkstückbewegungseinheit 9. Die Streben 27 des Saugerrahmens 17 sind ausreichend weit voneinander beabstandet, damit der Stanzkopf 8 zwischen ihnen angeordnet sein kann.

Insgesamt ist die Fertigungsanlage 1 gemäß Figur 6 derart ausgestaltet, dass Werkstückausschnitte 5, die entlang der y-Achse aufgereiht sind, nach dem vorstehend beschriebenen Verfahren ausgetrennt und nach dem abschließenden Freischneiden längs der y-Achse beziehungsweise y_{E}-Achse von dem Stanzkopf 8 der Stanzmaschine 2 abgeführt und anschließend von dem Restgitter 16 und aus der Stanzmaschine 2 entnommen werden können. Beispielhaft sind in Figur 6 zwei Werkstückausschnitte 5 angedeutet.

Der y_{E}-Antrieb der Be- und Entladevorrichtung 4 beziehungsweise der Streben 27 wird zeitweise als synchroner Zusatzantrieb des y-Antriebs der Werkstückbewegungseinheit 9 und zeitweise als eigenständiger Antrieb gesteuert. Zusätzlich kann auch der x_{E}-Antrieb der Be- und Entladevorrichtung 4 in Bezug auf den x-Antrieb der Werkstückbewegungseinheit 9 entsprechend gesteuert werden. Die Fertigungsanlage 1 nach Figur 6 hat den besonderen Vorteil, dass die Vakuumsauger 18 dem Restwerkstück 16 in y-Richtung nahezu uneingeschränkt folgen können. Eine gemeinsame Abfuhr freigeschnittener Werkstückausschnitte 5 in y-Richtung und eine gemeinsame Entnahme der freigeschnittenen Werkstückausschnitte 5 ist folglich bei in y-Richtung nahezu beliebiger Verteilung der Werkstückausschnitte 5 über die Blechtafel 3 möglich.

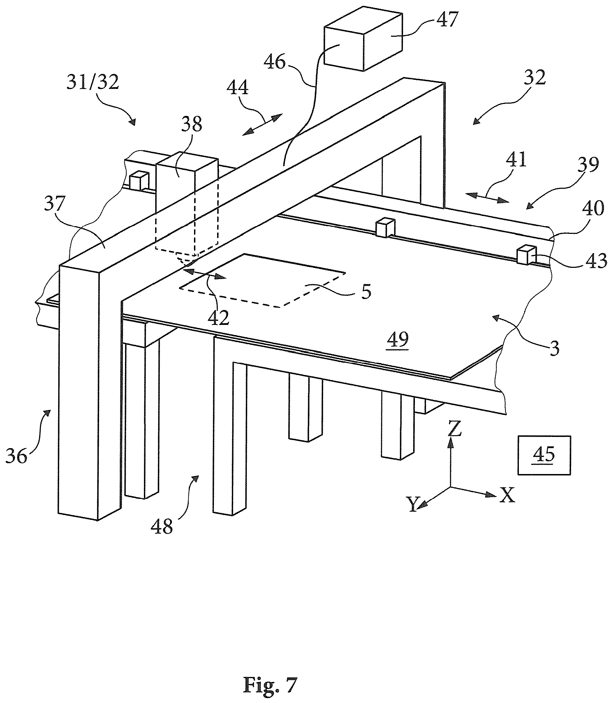

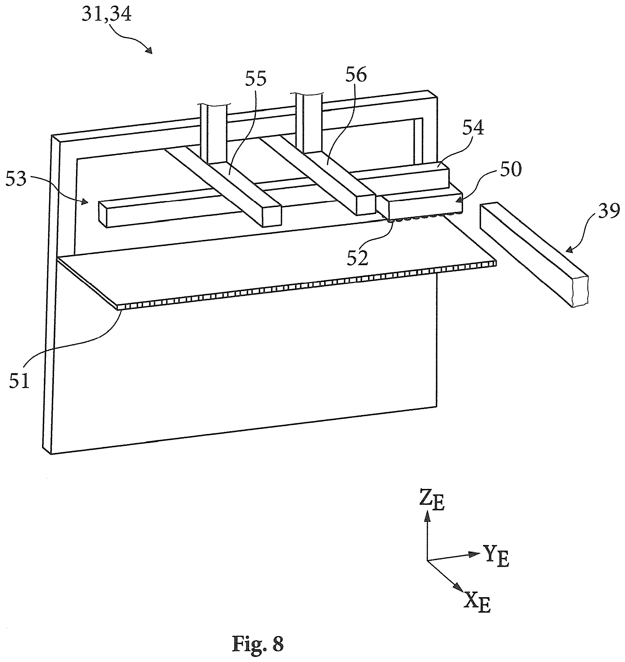

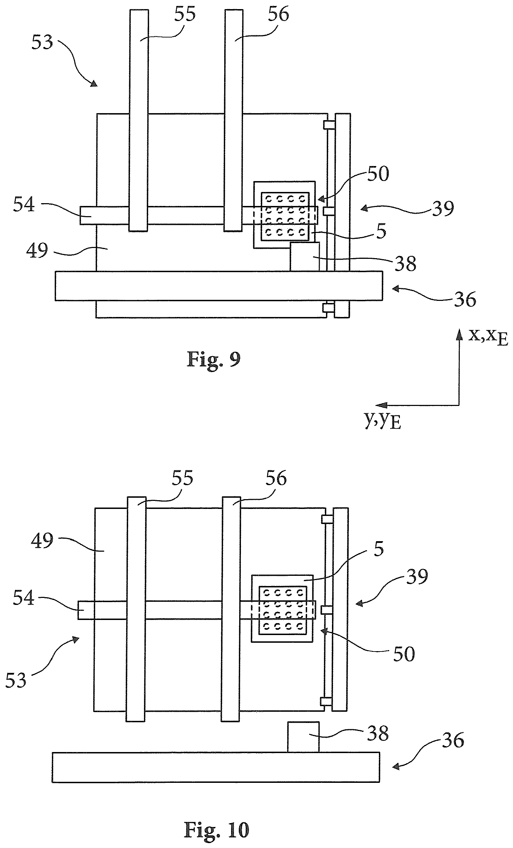

Gemäß Figur 7 umfasst eine als Fertigungsanlage 31 ausgeführte maschinelle Anordnung für die Blechfertigung abweichend von den maschinellen Anordnungen der Figuren 1 bis 6 als Werkzeugmaschine eine Laserschneidmaschine 32, die zur schneidenden Bearbeitung von plattenartigen Werkstücken in Form von Blechtafeln 3 eingesetzt wird. Eine maschinelle Entladevorrichtung 34 der Fertigungsanlage 31 ist in Figur 8 dargestellt. Ein mittels der maschinellen Entladevorrichtung 34 von der Laserschneidmaschine 32 abgeführter Werkstückausschnitt 5 ist in den Figuren 9 bis 11 zu erkennen.

Die Laserschneidmaschine 32 weist einen portalartigen Maschinenrahmen 36 mit einem Portal-Querträger 37 sowie einen an dem Portal-Querträger 37 geführten und als Schneideinheit der Laserschneidmaschine 32 vorgesehenen Laserschneidkopf 38 auf. Eine Werkstückbewegungseinheit 39 der Laserschneidmaschine 32 umfasst einen Träger 40, der an einer nicht gezeigten Führungseinrichtung in Richtung eines Doppelpfeils 41 und somit in einer ersten Achsrichtung (x-Achse) beweglich geführt ist und der mittels eines motorischen x-Antriebs längs der x-Achse verfahren kann. Spannpratzen 43 ermöglichen die Fixierung einer Blechtafel 3 an dem Träger 40.

Ebenfalls in x-Richtung kann der Laserschneidkopf 38 relativ zu dem Portalquerträger 37 beweglich ausgeführt sein (Doppelpfeil 42). Senkrecht dazu ist der Laserschneidkopf 38 in einer zweiten Achsrichtung (y-Achse) längs des Portal-Querträgers 37 verfahrbar (Doppelpfeil 44). Ist der Laserschneidkopf 38 auch in x-Richtung beweglich, so erzeugt ein motorischer x-Antrieb die Bewegungen des Laserschneidkopfs 38 in x-Richtung, ein motorischer y-Antrieb treibt den Laserschneidkopf 38 in y-Richtung an. Beide Antriebe des Laserschneidkopfs 38 werden ebenso wie der x-Antrieb der Werkstückbewegungseinheit 39 durch eine numerische Steuereinheit 45 der Fertigungsanlage 31 gesteuert.

Über ein Lichtleitkabel 46 ist der Laserschneidkopf 38 mit einer Laserstrahlquelle in Form eines herkömmlichen Festkörperlasers 47 verbunden. Die portalartige Führungsstruktur 36 übergreift einen Werkstücktisch 48, auf welchem eine Blechtafel 3 vor, während und nach der schneidenden Bearbeitung gelagert ist.

Mittels des Laserschneidkopfs 38 der Fertigungsanlage 1 wird in dem dargestellten Beispielsfall ein einzelner Werkstückausschnitt 5 aus der Blechtafel 3 ausgetrennt und dabei von einem Restwerkstück in Form eines Restgitters 49 abschließend freigeschnitten. In Figur 1 ist der Trennschnitt erst an zwei Seiten des Werkstückausschnitts 5 erstellt. Die zum Freischneiden des Werkstückausschnitts 5 auszuführende Relativbewegung der Blechtafel 3 und des Laserschneidkopfs 38 wird in y-Richtung durch Bewegen des Laserschneidkopfs 38 längs des Portal-Querträgers 37 und in x-Richtung durch Bewegen der Blechtafel 3 mittels der Werkstückbewegungseinheit 39 erzeugt. Ist der Laserschneidkopf auch in x-Richtung beweglich, so kann der Laserschneidkopf 38 zusätzlich in x-Richtung kurze hochdynamische Bewegungen relativ zu der Blechtafel 3 ausführen.

Nach Beendigung der Schneidoperation werden der freigeschnittene Werkstückausschnitt 5 und das Restgitter 49 in der aus den Figuren 9 bis 11 veranschaulichten Art und Weise mit einer gemeinsamen Abfuhrbewegung von dem Laserschneidkopf 38 der Laserschneidmaschine 32 abgeführt und dabei an der Fertigungsanlage 31 in einen Bereich bewegt, der in Figur 7 an der linken Seite des portalartigen Maschinenrahmens 36 ansatzweise erkennbar ist. Im Einzelnen ist dieser Bereich der Fertigungsanlage 31 in Figur 8 gezeigt.

Das Restgitter 49 wird bei der gemeinsam mit dem freigeschnittenen Werkstückausschnitt 5 ausgeführten Abfuhrbewegung mittels der Werkstückbewegungseinheit 39 bewegt, an welcher das Restgitter 49 mittels der Spannpratzen 43 festgelegt ist. Zur Bewegung des freigeschnittenen Werkstückausschnitts 5 dient die maschinelle Entladevorrichtung 34, die ebenfalls in Figur 8 gezeigt ist. Mit Hilfe der maschinellen Entladevorrichtung 34 wird schließlich der von dem Laserschneidkopf 38 abgeführte freigeschnittene Werkstückausschnitt 5 auch von dem Restgitter 49 und aus der Laserschneidmaschine 32 entnommen.

In Figur 8 ist eine Saugereinheit 50 der maschinellen Entladevorrichtung 34 oberhalb einer plattenartigen Werkstückauflage 51 des Werkstücktischs 48 angeordnet. Die Saugereinheit 50 besitzt ein kastenartiges Gehäuse, das an seiner Unterseite mit einem Saugerfeld versehen ist. Das Saugerfeld wird von einer Mehrzahl einzeln ansteuerbarer Vakuumsauger 52 herkömmlicher Bauart gebildet. Die Werkstückauflage 51 ist in bekannter Weise an ihrer Oberseite mit in Figur 8 nicht erkennbaren Borsten oder Rollen versehen, die eine reibungs- und kratzerfreie Bewegung der Blechtafel 3 über die Werkstückauflage 51 ermöglichen.

Die Saugereinheit 50 kann parallel zu der Werkstückauflage 51 jede beliebige Stelle an einer auf der Werkstückauflage 51 abgelegten Blechtafel 3 anfahren. Außerdem kann die Saugereinheit 50 senkrecht zu der Werkstückauflage 51 angehoben und abgesenkt werden. Zu diesem Zweck ist für die Saugereinheit 50 eine Bewegungseinheit 53 vorgesehen. Die Bewegungseinheit 53 umfasst eine Querschiene 54, an welcher die Saugereinheit 50 mit Hilfe eines motorischen y_{E}-Antriebs längs einer y_{E}- Achse bewegt werden kann. Gemeinsam mit der Saugereinheit 50 ist die Querschiene 54 mittels eines motorischen x_{E}-Antriebs entlang zweier Längsschienen 55, 56 der Bewegungseinheit 53 und dabei in Richtung einer x_{E}-Achse verfahrbar, die ihrerseits senkrecht zu der y_{E}-Achse verläuft. Zusammen mit der Querschiene 54 und der daran geführten Saugereinheit 50 können die Längsschienen 55, 56 mittels eines motorischen z_{E}-Antriebs in Richtung einer vertikalen z_{E}-Achse angehoben und abgesenkt werden. Auch die Antriebe der maschinellen Entladevorrichtung 34 werden durch die numerische Steuereinheit 45 der Fertigungsanlage 31 gesteuert.

Gemäß Figur 9 ist die Saugereinheit 50 mit Hilfe der Bewegungseinheit 53 in eine Position nahe dem Laserschneidkopf 38 bewegt worden. Die Saugereinheit 50 ist auf den noch nicht vollständig von dem Restgitter 49 freigeschnittenen Werkstückausschnitt 5 abgesenkt. Die Vakuumsauger 52 der Saugereinheit 50 sind aktiviert und folglich an dem Werkstückausschnitt 5 festgelegt. Das Restgitter 49 wird von den Spannpratzen 43 der Werkstückbewegungseinheit 39 gehalten. Aufgrund seiner Fixierung an der als Haltevorrichtung fungierenden Saugereinheit 50 behält der Werkstückausschnitt 5 nach dem abschließenden Freischneiden von dem Restgitter 49 gegenüber diesem diejenige Position bei, in welcher er vor dem abschließenden Freischneiden angeordnet war. Dementsprechend fluchtet der Werkstückausschnitt 5 auch nach dem abschließenden Freischneiden mit dem Restgitter 49.

Ist der Werkstückausschnitt 5 von dem Restgitter 49 vollständig freigeschnitten, so werden der an der Saugereinheit 50 festgelegte freigeschnittene Werkstückausschnitt 5 und das von der Werkstückbewegungseinheit 39 gehaltene Restgitter 49 mit einer gemeinsamen Abfuhrbewegung relativ zu dem Laserschneidkopf 38 der Laserschneidmaschine 32 bewegt. Zu diesem Zweck werden die Saugereinheit 50 längs der x_{E}-Achse und die Werkstückbewegungseinheit 39 längs der x-Achse verfahren.

Die numerische Steuereinheit 45 der Fertigungsanlage 31 steuert dabei den x_{E}-Antrieb der Saugereinheit 50 und den x-Antrieb der Werkstückbewegungseinheit 39 derart, dass die Bewegungen der Saugereinheit 50 und der Werkstückbewegungseinheit 39 synchron ausgeführt werden und der mittels der Saugereinheit 50 relativ zu dem Restgitter 49 positionierte freigeschnittene Werkstückausschnitt 5 während der gemeinsamen Abfuhrbewegung im Wesentlichen diejenige Relativposition gegenüber dem Restgitter 49 beibehält, in welcher der Werkstückausschnitt 5 zu Beginn der gemeinsamen Abfuhrbewegung und auch bereits vor seinem abschließenden Freischneiden angeordnet war. Infolgedessen sind während der gemeinsamen Abfuhrbewegung eine unerwünschte Fehlausrichtung, insbesondere ein Verkanten, des freigeschnittenen Werkstückausschnitts 5 gegenüber dem Restgitter 49 und eine durch die Fehlausrichtung verursachte Betriebsstörung der Fertigungsanlage 31 ausgeschlossen.

Aufgrund der gemeinsamen Abfuhrbewegung gelangen der freigeschnittene Werkstückausschnitt 5 und das Restgitter 49 aus ihren Positionen gemäß Figur 9 in die Positionen gemäß Figur 10.

Da sich während der gemeinsamen Abfuhrbewegung die Position des freigeschnittenen Werkstückausschnitts 5 relativ zu dem Restgitter 49 allenfalls geringfügig geändert hat, ist der freigeschnittene Werkstückausschnitt 5 in Figur 10 derart gegenüber dem Restgitter 49 positioniert, dass er problemlos aus dem Restgitter 49 entnommen werden kann. Zu diesem Zweck wird zunächst die nunmehr als Entnahmevorrichtung dienende Saugereinheit 50 zusammen mit dem daran gehaltenen freigeschnittenen Werkstückausschnitt 5 mittels des z_{E}-Antriebs der Bewegungseinheit 53 angehoben. Anschließend kann die gesamte Bewegungseinheit 53 gemeinsam mit dem freigeschnittenen Werkstückausschnitt 5 in eine Position abseits des Restgitters 49 und der Werkstückauflage 51 des Werkstücktischs 48 verfahren, wo der freigeschnittene Werkstückausschnitt 5 schließlich abgelegt wird.

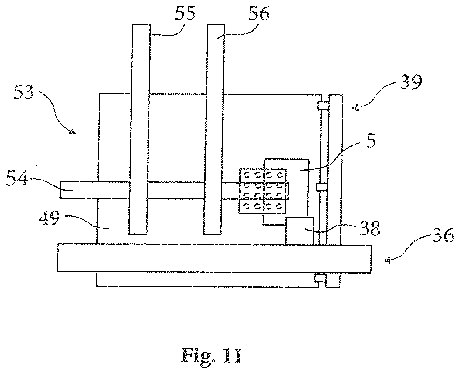

Abweichend von den Figuren 9 und 10 zeigt Figur 11 den Werkstückausschnitt 5 und das Restgitter 49, wie sie gemeinsam an der Saugereinheit 50 festgelegt sind. Da die Saugereinheit 50 den Werkstückausschnitt 5 und das Restgitter 49 auch nach dem abschließenden Freischneiden des Werkstückausschnitts 5 fixiert, kann die Saugereinheit 50 besonders funktionssicher den freigeschnittenen Werkstückausschnitt 5 mit einer Solllage gegenüber dem Restgitter 49 positionieren und diese Sollpositionierung während der gemeinsamen Abfuhrbewegung des freigeschnittenen Werkstückausschnitts 5 und des Restgitters 49 aufrechterhalten.

Sind der freigeschnittene Werkstückausschnitt 5 und das Restgitter 49 von dem Laserschneidkopf 38 der Laserschneidmaschine 32 abgeführt und soll der freigeschnittene Werkstückausschnitt 5 von dem Restgitter 49 entnommen werden, so werden die Vakuumsauger 52 der sowohl den freigeschnittenen Werkstückausschnitt 5 als auch das Restgitter 49 überdeckenden Saugereinheit 50 zunächst drucklos geschaltet. Anschließend wird die Saugereinheit 50 derart umgesetzt, dass die Vakuumsauger 52 nur noch an dem freigeschnittenen Werkstückausschnitt 5 anliegen. Nach dem erneuten Aktivieren der Vakuumsauger 52 kann schließlich die Saugereinheit 50 den freigeschnittenen Werkstückausschnitt 5 von dem Restgitter 49 entnehmen und von dem Restgitter 49 abführen.

Alternativ besteht die Möglichkeit, nach der gemeinsamen Abfuhrbewegung des freigeschnittenen Werkstückausschnitts 5 und des Restgitters 49 von dem Laserschneidkopf 38 durch entsprechende Ansteuerung der Saugereinheit 50 lediglich diejenigen Vakuumsauger 52 zu deaktivieren, die an dem Restgitter 49 anliegen. In diesem Fall bedarf es vor dem Anheben der Saugereinheit 50 und der damit verbundenen Entnahme des freigeschnittenen Werkstückausschnitts 5 von dem Restgitter 49 keines Umsetzens der Saugereinheit 50 an der bearbeiteten Blechtafel 3.

## Patentansprüche

1. Fertigungsverfahren,
• im Rahmen dessen mittels einer Schneideinheit (8, 38) einer Werkzeugmaschine (2, 32) aus einem insbesondere plattenartigen Werkstück (3), vorzugsweise aus einem Blech, zusätzlich zu einem als erster Werkstückausschnitt (5) vorgesehenen Werkstückausschnitt zumindest ein zweiter Werkstückausschnitt (5) ausgetrennt und dabei von einem Restwerkstück (16, 49) des Werkstücks (3) abschließend freigeschnitten wird,
• wobei zum Austrennen des zweiten Werkstückausschnitts (5) aus dem Werkstück (3) der freigeschnittene erste Werkstückausschnitt (5) von der Schneideinheit (8, 38) der Werkzeugmaschine (2, 32) maschinell abgeführt wird, indem der freigeschnittene erste Werkstückausschnitt (5) und das Restwerkstück (16, 49) mit einer gemeinsamen Abfuhrbewegung relativ zu der Schneideinheit (8, 38) der Werkzeugmaschine (2, 32) bewegt werden, wobei der freigeschnittene erste Werkstückausschnitt (5) während der gemeinsamen Abfuhrbewegung des freigeschnittenen ersten Werkstückausschnitts (5) und des Restwerkstücks (16, 49) an einer Haltevorrichtung (17, 50) festgelegt ist und mittels der Haltevorrichtung (17, 50) relativ zu dem Restwerkstück (16, 49) positioniert wird,
**dadurch gekennzeichnet, dass**
nachdem der erste Werkstückausschnitt (5) und der zweite Werkstückausschnitt (5) mittels der Schneideinheit (8, 38) der Werkzeugmaschine (2, 32) teilweise von dem Restwerkstück (16, 49) getrennt worden sind, beide Werkstückausschnitte (5) an einer Haltevorrichtung (17, 50) festgelegt werden und dass der erste Werkstückausschnitt (5) und der zweite Werkstückausschnitt (5) abschließend freigeschnitten werden, wobei der freigeschnittene erste Werkstückausschnitt (5) und das Restwerkstück (16, 49) vor dem abschließenden Freischneiden des zweiten Werkstückausschnitts (5) mit der gemeinsamen Abfuhrbewegung des freigeschnittenen ersten Werkstückausschnitts (5) und des Restwerkstücks (16, 49) relativ zu der Schneideinheit (8, 38) der Werkzeugmaschine (2, 32) bewegt werden.

2. Fertigungsverfahren nach Anspruch 1, **dadurch gekennzeichnet, dass** der erste Werkstückausschnitt (5) und der zweite Werkstückausschnitt (5) vor dem abschließenden Freischneiden des ersten Werkstückausschnitts (5) mittels der Schneideinheit (8, 38) der Werkzeugmaschine (2, 32) teilweise von dem Restwerkstück (16, 49) derart getrennt werden, dass nach dem abschließenden Freischneiden des ersten Werkstückausschnitts (5) der freigeschnittene erste Werkstückausschnitt (5) und das Restwerkstück (16, 49) zum Freischneiden des zweiten Werkstückausschnitts (5) nur entlang einer geradlinigen Bewegungsachse mit einer gemeinsamen Abfuhrbewegung relativ zu der Schneideinheit (8, 38) der Werkzeugmaschine (2, 32) bewegt werden müssen.

3. Fertigungsverfahren nach einem der vorhergehenden Ansprüche, **dadurch gekennzeichnet, dass** der freigeschnittene zweite Werkstückausschnitt (5) von der Schneideinheit (8, 38) der Werkzeugmaschine (2, 32) maschinell abgeführt wird, indem der freigeschnittene zweite Werkstückausschnitt (5) und das Restwerkstück (16, 49) mit einer gemeinsamen Abfuhrbewegung relativ zu der Schneideinheit (8, 38) der Werkzeugmaschine (2, 32) bewegt werden, wobei der freigeschnittene zweite Werkstückausschnitt (5) während der gemeinsamen Abfuhrbewegung des freigeschnittenen zweiten Werkstückausschnitts (5) und des Restwerkstücks (16, 49) an einer Haltevorrichtung (17, 50) festgelegt ist und mittels der Haltevorrichtung (17, 50) relativ zu dem Restwerkstück (16, 49) positioniert wird.

4. Fertigungsverfahren nach einem der vorhergehenden Ansprüche, **dadurch gekennzeichnet, dass** der zweite Werkstückausschnitt (5) an derjenigen Haltevorrichtung (17, 50) festgelegt wird, an welcher der freigeschnittene erste Werkstückausschnitt (5) während der gemeinsamen Abfuhrbewegung des freigeschnittenen ersten Werkstückausschnitts (5) und des Restwerkstücks (16, 49) festgelegt ist und welche eine gemeinsame Haltevorrichtung für den ersten Werkstückausschnitt (5) und den zweiten Werkstückausschnitt (5) bildet.

5. Fertigungsverfahren nach einem der vorhergehenden Ansprüche, **dadurch gekennzeichnet, dass** der erste Werkstückausschnitt (5) und der zweite Werkstückausschnitt (5) nach dem abschließenden Freischneiden von dem Restwerkstück (16, 49) entnommen werden, wobei die freigeschnittenen Werkstückausschnitte (5) vorzugsweise mittels einer von der gemeinsamen Haltevorrichtung gebildeten Entnahmevorrichtung gemeinsam von dem Restwerkstück (16, 49) entnommen werden,

6. Fertigungsverfahren nach einem der vorhergehenden Ansprüche, **dadurch gekennzeichnet, dass** der freigeschnittene erste Werkstückausschnitt (5) bei der gemeinsamen Abfuhrbewegung des freigeschnittenen ersten Werkstückausschnitts (5) und des Restwerkstücks (16, 49) mittels der Haltevorrichtung (17, 50) bewegt wird.

7. Fertigungsverfahren nach Anspruch 6, **dadurch gekennzeichnet, dass** der freigeschnittene erste Werkstückausschnitt (5) bei der gemeinsamen Abfuhrbewegung des freigeschnittenen ersten Werkstückausschnitts (5) und des Restwerkstücks (16, 49) mittels der Haltevorrichtung (17, 50) derart abgestimmt auf die Bewegung des Restwerkstücks (16, 49) bewegt wird, dass der freigeschnittene erste Werkstückausschnitt (5) wenigstens nahezu diejenige Relativposition gegenüber dem Restwerkstück (16, 49) beibehält, in welcher er vor seinem abschließenden Freischneiden von dem Restwerkstück (16, 49) angeordnet ist.

8. Fertigungsverfahren nach einem der vorhergehenden Ansprüche, **dadurch gekennzeichnet, dass** das Restwerkstück (16, 49) mittels einer Werkstückbewegungseinheit (9, 39) bewegt wird, die von der Haltevorrichtung (17, 50) verschieden ist.

9. Fertigungsverfahren nach einem der vorhergehenden Ansprüche, **dadurch gekennzeichnet, dass** während der gemeinsamen Abfuhrbewegung des freigeschnittenen ersten Werkstückausschnitts (5) und des Restwerkstücks (16, 49) der freigeschnittene erste Werkstückausschnitt (5) und das Restwerkstück (16, 49) an der Haltevorrichtung (17, 50) festgelegt sind und mittels der Haltevorrichtung (17, 50) relativ zueinander positioniert werden.

10. Maschinelle Anordnung für die Fertigung,
• mit einer Werkzeugmaschine (2, 32), die eine Schneideinheit (8, 38) aufweist, welche aus einem insbesondere plattenartigen Werkstück (3), vorzugsweise aus einem Blech, zusätzlich zu einem als erster Werkstückausschnitt (5) vorgesehenen Werkstückausschnitt einen zweiten Werkstückausschnitt (5) austrennt und dabei von einem Restwerkstück (16, 49) des Werkstücks (3) abschließend freischneidet,
• mit einer maschinellen Vorrichtung zum Abführen des freigeschnittenen ersten Werkstückausschnitts (5) von der Schneideinheit (8, 38) der Werkzeugmaschine (2, 32), wobei die maschinelle Vorrichtung zum Abführen des freigeschnittenen ersten Werkstückausschnitts (5) den freigeschnittenen ersten Werkstückausschnitt (5) und das Restwerkstück (16, 49) mit einer gemeinsamen Abfuhrbewegung relativ zu der Schneideinheit (8, 38) der Werkzeugmaschine (2, 32) bewegt sowie
• mit einer Haltevorrichtung (17, 50) der maschinellen Vorrichtung zum Abführen des freigeschnittenen ersten Werkstückausschnitts (5), wobei die Haltevorrichtung (17, 50) den freigeschnittenen ersten Werkstückausschnitt (5) während der gemeinsamen Abfuhrbewegung des freigeschnittenen ersten Werkstückausschnitts (5) und des Restwerkstücks (16, 49) festlegt und wobei die Haltevorrichtung (17, 50) den freigeschnittenen ersten Werkstückausschnitt (5) während der gemeinsamen Abfuhrbewegung des freigeschnittenen ersten Werkstückausschnitts (5) und des Restwerkstücks (16, 49) relativ zu dem Restwerkstück (16, 49) positioniert,
**dadurch gekennzeichnet, dass** in Betrieb, nachdem die Schneideinheit (8, 38) der Werkzeugmaschine (2, 32) den ersten Werkstückausschnitt (5) und den zweiten Werkstückausschnitt (5) teilweise von dem Restwerkstück (16, 49) getrennt hat, die Haltevorrichtung (17, 50) beide Werkstückausschnitte (5) festlegt und dass die Schneideinheit (8, 38) der Werkzeugmaschine (2, 32) den ersten Werkstückausschnitt (5) und den zweiten Werkstückausschnitt (5) abschließend freischneidet, wobei die maschinelle Vorrichtung zum Abführen des freigeschnittenen ersten Werkstückausschnitts (5) den freigeschnittenen ersten Werkstückausschnitt (5) und das Restwerkstück (16, 49) vor dem abschließenden Freischneiden des zweiten Werkstückausschnitts (5) mit der gemeinsamen Abfuhrbewegung des freigeschnittenen ersten Werkstückausschnitts (5) und des Restwerkstücks (16, 49) relativ zu der Schneideinheit (8, 38) der Werkzeugmaschine (2, 32) bewegt.

11. Maschinelle Anordnung nach Anspruch 10, **dadurch gekennzeichnet, dass** bei der gemeinsamen Abfuhrbewegung des freigeschnittenen ersten Werkstückausschnitts (5) und des Restwerkstücks (16, 49) die Haltevorrichtung (17, 50) den freigeschnittenen ersten Werkstückausschnitt (5) und eine Werkstückbewegungseinheit (9, 39) das Restwerkstück (16, 49) bewegen und dass eine numerische Steuereinheit (15, 45) vorgesehen ist, die bei der gemeinsamen Abfuhrbewegung des freigeschnittenen ersten Werkstückausschnitts (5) und des Restwerkstücks (16, 49) die Bewegung der Haltevorrichtung (17, 50) und die Bewegung der Werkstückbewegungseinheit (9, 39) derart aufeinander abgestimmt steuert, dass der freigeschnittene erste Werkstückausschnitt (5) wenigstens nahezu diejenige Relativposition gegenüber dem Restwerkstück (16, 49) beibehält, in welcher er vor dem abschließenden Freischneiden angeordnet ist.

12. Maschinelle Anordnung nach Anspruch 10 oder Anspruch 11, **dadurch gekennzeichnet, dass** die Haltevorrichtung (17, 50) der maschinellen Vorrichtung zum Abführen des freigeschnittenen ersten Werkstückausschnitts (5) eine gemeinsame Haltevorrichtung für den ersten Werkstückausschnitt (5) und den zweiten Werkstückausschnitt (5) bildet.

13. Maschinelle Anordnung nach einem der Ansprüche 10 bis 12, **dadurch gekennzeichnet, dass** eine vorzugsweise von der Haltevorrichtung (17, 50) der maschinellen Vorrichtung zum Abführen des freigeschnittenen ersten Werkstückausschnitts (5) gebildete Entnahmevorrichtung vorgesehen ist, welche wenigstens einen freigeschnittenen Werkstückausschnitt (5) von dem Restwerkstück (16, 49) entnimmt.

14. Maschinelle Anordnung nach einem der Ansprüche 10 bis 13, **dadurch gekennzeichnet, dass** der oder die freigeschnittenen Werkstückausschnitte (5) mittels der Haltevorrichtung (17, 50) mit einem in einer Hauptebene des plattenartigen Werkstücks (3) relativ zu dem Restwerkstück (16, 49) bestehenden Bewegungsspiel festlegbar ist oder sind.

## Claims

1. Manufacturing method,
• in which, by means of a cutting unit (8, 38) of a machine tool (2, 32), in addition to a workpiece cut-out provided as a first workpiece cut-out (5), at least one second workpiece cut-out (5) is cut out from an in particular plate-like workpiece (3), preferably from a metal sheet, and, in the process, is finally cut free from a remainder workpiece (16, 49) of the workpiece (3),
• in order to cut the second workpiece cut-out (5) out of the workpiece (3), the cut-free first workpiece cut-out (5) being removed mechanically from the cutting unit (8, 38) of the machine tool (2, 32) by the cut-free first workpiece cut-out (5) and the remainder workpiece (16, 49) being moved relative to the cutting unit (8, 38) of the machine tool (2, 32) by a common removal movement, the cut-free first workpiece cut-out (5), during the common removal movement of the cut-free first workpiece cut-out (5) and the remainder workpiece (16, 49), being secured to a holding device (17, 50) and being positioned relative to the remainder workpiece (16, 49) by means of the holding device (17, 50),
**characterized in that**
after the first workpiece cut-out (5) and the second workpiece cut-out (5) have been partially separated from the remainder workpiece (16, 49) by means of the cutting unit (8, 38) of the machine tool (2, 32), both workpiece cut-outs (5) are secured to a holding device (17, 50), and **in that** the first workpiece cut-out (5) and the second workpiece cut-out (5) are finally cut free, the cut-free first workpiece cut-out (5) and the remainder workpiece (16, 49), before the second workpiece cut-out (5) is finally cut free, being moved relative to the cutting unit (8, 38) of the machine tool (2, 32) by the common removal movement of the cut-free first workpiece cut-out (5) and the remainder workpiece (16, 49).

2. Manufacturing method according to claim 1, **characterized in that** the first workpiece cut-out (5) and the second workpiece cut-out (5), before the first workpiece cut-out (5) is finally cut free by means of the cutting unit (8, 38) of the machine tool (2, 32), are partially separated from the remainder workpiece (16, 49) such that, after the first workpiece cut-out (5) has been finally cut free, the cut-free first workpiece cut-out (5) and the remainder workpiece (16, 49) only have to be moved along a straight movement axis by a common removal movement relative to the cutting unit (8, 38) of the machine tool (2, 32) in order to cut the second workpiece cut-out (5) free.

3. Manufacturing method according to either of the preceding claims, **characterized in that** the cut-free second workpiece cut-out (5) is removed mechanically from the cutting unit (8, 38) of the machine tool (2, 32) by the cut-free second workpiece cut-out (5) and the remainder workpiece (16, 49) being moved relative to the cutting unit (8, 38) of the machine tool (2, 32) by a common removal movement, the cut-free second workpiece cut-out (5), during the common removal movement of the cut-free second workpiece cut-out (5) and the remainder workpiece (16, 49), being secured to a holding device (17, 50) and being positioned relative to the remainder workpiece (16, 49) by means of the holding device (17, 50).

4. Manufacturing method according to any of the preceding claims, **characterized in that** the second workpiece cut-out (5) is secured to the holding device (17, 50) on which the cut-free first workpiece cut-out (5) is secured during the common removal movement of the cut-free first workpiece cut-out (5) and the remainder workpiece (16, 49) and which forms a common holding device for the first workpiece cut-out (5) and the second workpiece cut-out (5).

5. Manufacturing method according to any of the preceding claims, **characterized in that** the first workpiece cut-out (5) and the second workpiece cut-out (5) are withdrawn from the remainder workpiece (16, 49) after the final cutting free, the cut-free workpiece cut-outs (5) being withdrawn together from the remainder workpiece (16, 49) preferably by means of a withdrawal device formed by the common holding device.

6. Manufacturing method according to any of the preceding claims, **characterized in that** the cut-free first workpiece cut-out (5) is moved by means of the holding device (17, 50) during the common removal movement of the cut-free first workpiece cut-out (5) and the remainder workpiece (16, 49).

7. Manufacturing method according to claim 6, **characterized in that** the cut-free first workpiece cut-out (5), during the common removal movement of the cut-free first workpiece cut-out (5) and the remainder workpiece (16, 49), is moved by means of the holding device (17, 50) so as to be coordinated with the movement of the remainder workpiece (16, 49) such that the cut-free first workpiece cut-out (5) retains at least almost the position, relative to the remainder workpiece (16, 49), in which it was arranged before it was finally cut free from the remainder workpiece (16, 49).

8. Manufacturing method according to any of the preceding claims, **characterized in that** the remainder workpiece (16, 49) is moved by means of a workpiece movement unit (9, 39) which is different from the holding device (17, 50).

9. Manufacturing method according to any of the preceding claims, **characterized in that** during the common removal movement of the cut-free first workpiece cut-out (5) and the remainder workpiece (16, 49), the cut-free first workpiece cut-out (5) and the remainder workpiece (16, 49) are secured to the holding device (17, 50) and are positioned relative to one another by means of the holding device (17, 50).

10. Mechanical assembly for manufacturing,
• comprising a machine tool (2, 32) which has a cutting unit (8, 38) which, in addition to a workpiece cut-out provided as a first workpiece cut-out (5), cuts a second workpiece cut-out (5) out from an in particular plate-like workpiece (3), preferably from a metal sheet, and, in the process, finally cuts said second workpiece cut-out free from a remainder workpiece (16, 49) of the workpiece (3),
• comprising a mechanical device for removing the cut-free first workpiece cut-out (5) from the cutting unit (8, 38) of the machine tool (2, 32), the mechanical device for removing the cut-free first workpiece cut-out (5) moving the cut-free first workpiece cut-out (5) and the remainder workpiece (16, 49) relative to the cutting unit (8, 38) of the machine tool (2, 32) by a common removal movement, and
• comprising a holding device (17, 50) of the mechanical device for removing the cut-free first workpiece cut-out (5), the holding device (17, 50) securing the cut-free first workpiece cut-out (5) during the common removal movement of the cut-free first workpiece cut-out (5) and the remainder workpiece (16, 49), and the holding device (17, 50) positioning the cut-free first workpiece cut-out (5) relative to the remainder workpiece (16, 49) during the common removal movement of the cut-free first workpiece cut-out (5) and the remainder workpiece (16, 49),
**characterized in that**
during operation, after the cutting unit (8, 38) of the machine tool (2, 32) has partially separated the first workpiece cut-out (5) and the second workpiece cut-out (5) from the remainder workpiece (16, 49), the holding device (17, 50) secures both workpiece cut-outs (5), and **in that** the cutting unit (8, 38) of the machine tool (2, 32) finally cuts the first workpiece cut-out (5) and the second workpiece cut-out (5) free, the mechanical device for removing the first cut-free workpiece cut-out (5), before the second workpiece cut-out (5) has been finally cut free, moving the cut-free first workpiece cut-out (5) and the remainder workpiece (16, 49) relative to the cutting unit (8, 38) of the machine tool (2, 32) by the common removal movement of the first workpiece cut-out (5) and the remainder workpiece (16, 49).

11. Mechanical assembly according to claim 10, **characterized in that** during the common removal movement of the cut-free first workpiece cut-out (5) and the remainder workpiece (16, 49), the holding device (17, 50) moves the cut-free first workpiece cut-out (5), and a workpiece movement unit (9, 39) moves the remainder workpiece (16, 49), and **in that** a numerical control unit (15, 45) is provided which, during the common removal movement of the cut-free first workpiece cut-out (5) and the remainder workpiece (16, 49), controls the movement of the holding device (17, 50) and the movement of the workpiece movement unit (9, 39) so as to be coordinated with one another such that the cut-free first workpiece cut-out (5) retains at least almost the position, relative to the remainder workpiece (16, 49), in which it was arranged before the final cutting free.

12. Mechanical assembly according to either claim 10 or claim 11, **characterized in that** the holding device (17, 50) of the mechanical device for removing the cut-free first workpiece cut-out (5) forms a common holding device for the first workpiece cut-out (5) and the second workpiece cut-out (5).

13. Mechanical assembly according to any of claims 10 to 12, **characterized in that** a withdrawal device, which is preferably formed by the holding device (17, 50) of the mechanical device for removing the cut-free first workpiece cut-out (5), is provided which withdraws at least one cut-free workpiece cut-out (5) from the remainder workpiece (16, 49).

14. Mechanical assembly according to any of claims 10 to 13, **characterized in that** the cut-free workpiece cut-out(s) (5) can be secured by means of the holding device (17, 50) so as to have movement play relative to the remainder workpiece (16, 49) in a main plane of the plate-like workpiece (3).

## Revendications

1. Procédé de fabrication,
• dans le cadre duquel, au moyen d'une unité de coupe (8, 38) d'une machine-outil (2, 32), en plus d'une découpe de pièce prévue comme première découpe de pièce (5), au moins une deuxième découpe de pièce (5) est séparée d'une pièce (3) en particulier de type plaque, de préférence d'une tôle, et en l'occurrence est finalement dégagée par découpage d'une pièce restante (16, 49) de la pièce (3),
• dans lequel, pour la séparation de la deuxième découpe de pièce (5) de la pièce (3), la première découpe de pièce (5) dégagée par découpage est évacuée mécaniquement de l'unité de coupe (8, 38) de la machine-outil (2, 32), par le fait que la première découpe de pièce (5) dégagée par découpage et la pièce restante (16, 49) sont déplacées par un déplacement d'évacuation commun par rapport à l'unité de coupe (8, 38) de la machine-outil (2, 32), dans lequel la première découpe de pièce (5) dégagée par découpage est, pendant le déplacement d'évacuation commun de la première découpe de pièce (5) dégagée par découpage et de la pièce restante (16, 49), fixée à un dispositif de retenue (17, 50) et est positionnée par rapport à la pièce restante (16, 49) au moyen du dispositif de retenue (17, 50),
**caractérisé en ce**
**qu'**après que la première découpe de pièce (5) et la deuxième découpe de pièce (5) ont été séparées partiellement de la pièce restante (16, 49) au moyen de l'unité de coupe (8, 38) de la machine-outil (2, 32), les deux découpes de pièce (5) sont fixées à un dispositif de retenue (17, 50), et **en ce que** la première découpe de pièce (5) et la deuxième découpe de pièce (5) sont finalement dégagées par découpage, la première découpe de pièce (5) dégagée par découpage et la pièce restante (16, 49) étant déplacées avant le dégagement par découpage final de la deuxième découpe de pièce (5) par le déplacement d'évacuation commun de la première découpe de pièce (5) dégagée par découpage et de la pièce restante (16, 49) par rapport à l'unité de coupe (8, 38) de la machine-outil (2, 32).

2. Procédé de fabrication selon la revendication 1, **caractérisé en ce que** la première découpe de pièce (5) et la deuxième découpe de pièce (5) sont, avant le dégagement par découpage final de la première découpe de pièce (5), séparées partiellement de la pièce restante (16, 49) au moyen de l'unité de coupe (8, 38) de la machine-outil (2, 32), de telle sorte qu'après le dégagement par découpage final de la première découpe de pièce (5), la première découpe de pièce (5) dégagée par découpage et la pièce restante (16, 49) doivent, pour le dégagement par découpage de la deuxième découpe de pièce (5), être déplacées seulement le long d'un axe de déplacement rectiligne par un déplacement d'évacuation commun par rapport à l'unité de coupe (8, 38) de la machine-outil (2, 32).

3. Procédé de fabrication selon l'une des revendications précédentes, **caractérisé en ce que** la deuxième découpe de pièce (5) dégagée par découpage est évacuée mécaniquement de l'unité de coupe (8, 38) de la machine-outil (2, 32), par le fait que la deuxième découpe de pièce (5) dégagée par découpage et la pièce restante (16, 49) sont déplacées par un déplacement d'évacuation commun par rapport à l'unité de coupe (8, 38) de la machine-outil (2, 32), la deuxième découpe de pièce (5) dégagée par découpage étant fixée à un dispositif de retenue (17, 50) pendant le déplacement d'évacuation commun de la deuxième découpe de pièce (5) dégagée par découpage et de la pièce restante (16, 49) et étant positionnée par rapport à la pièce restante (16, 49) au moyen du dispositif de retenue (17, 50).

4. Procédé de fabrication selon l'une des revendications précédentes, **caractérisé en ce que** la deuxième découpe de pièce (5) est fixée au dispositif de retenue (17, 50) auquel la première découpe de pièce (5) dégagée par découpage est fixée pendant le déplacement d'évacuation commun de la première découpe de pièce (5) dégagée par découpage et de la pièce restante (16, 49) et qui forme un dispositif de retenue commun pour la première découpe de pièce (5) et la deuxième découpe de pièce (5).

5. Procédé de fabrication selon l'une des revendications précédentes, **caractérisé en ce que** la première découpe de pièce (5) et la deuxième découpe de pièce (5) sont retirées après le dégagement par découpage final de la pièce restante (16, 49), les découpes de pièce (5) dégagées par découpage étant retirées conjointement de la pièce restante (16, 49) de préférence au moyen d'un dispositif de retrait formé par le dispositif de retenue commun.

6. Procédé de fabrication selon l'une des revendications précédentes, **caractérisé en ce que** la première découpe de pièce (5) dégagée par découpage est déplacée au moyen du dispositif de retenue (17, 50) lors du déplacement d'évacuation commun de la première découpe de pièce (5) dégagée par découpage et de la pièce restante (16, 49).

7. Procédé de fabrication selon la revendication 6, **caractérisé en ce que** la première découpe de pièce (5) dégagée par découpage est, lors du déplacement d'évacuation commun de la première découpe de pièce (5) dégagée par découpage et de la pièce restante (16, 49), déplacée au moyen du dispositif de retenue (17, 50) de manière adaptée au déplacement de la pièce restante (16, 49), de telle sorte que la première découpe de pièce (5) dégagée par découpage maintient au moins presque la position relative par rapport à la pièce restante (16, 49) dans laquelle elle est disposée avant son dégagement par découpage final de la pièce restante (16, 49).

8. Dispositif de fabrication selon l'une des revendications précédentes, **caractérisé en ce que** la pièce restante (16, 49) est déplacée au moyen d'une unité de déplacement de pièce (9, 39) qui est différente du dispositif de retenue (17, 50).

9. Procédé de fabrication selon l'une des revendications précédentes, **caractérisé en ce que** pendant le déplacement d'évacuation commun de la première découpe de pièce (5) dégagée par découpage et de la pièce restante (16, 49), la première découpe de pièce (5) dégagée par découpage et la pièce restante (16, 49) sont fixées au dispositif de retenue (17, 50) et sont positionnées l'une par rapport à l'autre au moyen du dispositif de retenue (17, 50).

10. Arrangement mécanisé pour la fabrication,
• comportant une machine-outil (2, 32) qui comprend une unité de coupe (8, 38), laquelle sépare une deuxième découpe de pièce (5) d'une pièce (3) en particulier de type plaque, de préférence d'une tôle, en plus d'une découpe de pièce prévue comme première découpe de pièce (5), et en l'occurrence la dégage finalement par découpage d'une pièce restante (16, 49) de la pièce (3),
• comportant un dispositif mécanisé pour l'évacuation de la première découpe de pièce (5) dégagée par découpage de l'unité de coupe (8, 38) de la machine-outil (2, 32), dans lequel le dispositif mécanisé pour l'évacuation de la première découpe de pièce (5) dégagée par découpage déplace la première découpe de pièce (5) dégagée par découpage et la pièce restante (16, 49) par un déplacement d'évacuation commun par rapport à l'unité de coupe (8, 38) de la machine-outil (2, 32) et
• comportant un dispositif de retenue (17, 50) du dispositif mécanisé pour l'évacuation de la première découpe de pièce (5) dégagée par découpage, dans lequel le dispositif de retenue (17, 50) fixe la première découpe de pièce (5) dégagée par découpage pendant le déplacement d'évacuation commun de la première découpe de pièce (5) dégagée par découpage et de la pièce restante (16, 49) et dans lequel le dispositif de retenue (17, 50) positionne la première découpe de pièce (5) dégagée par découpage par rapport à la pièce restante (16, 49) pendant le déplacement d'évacuation commun de la première découpe de pièce (5) dégagée par découpage et de la pièce restante (16, 49),
**caractérisé en ce que**, lors du fonctionnement,
après que l'unité de coupe (8, 38) de la machine-outil (2, 32) a séparé la première découpe de pièce (5) et la deuxième découpe de pièce (5) partiellement de la pièce restante (16, 49), le dispositif de retenue (17, 50) fixe les deux découpes de pièce (5) et **en ce que** l'unité de coupe (8, 38) de la machine-outil (2, 32) dégage finalement par découpage la première découpe de pièce (5) et la deuxième découpe de pièce (5), le dispositif mécanisé pour l'évacuation de la première découpe de pièce (5) dégagée par découpage déplaçant la première découpe de pièce (5) dégagée par découpage et la pièce restante (16, 49) avant le dégagement par découpage final de la deuxième découpe de pièce (5) par le déplacement d'évacuation commun de la première découpe de pièce (5) dégagée par découpage et de la pièce restante (16, 49) par rapport à l'unité de coupe (8, 38) de la machine-outil (2, 32).

11. Arrangement mécanisé selon la revendication 10, **caractérisé en ce que** lors du déplacement d'évacuation commun de la première découpe de pièce (5) dégagée par découpage et de la pièce restante (16, 49), le dispositif de retenue (17, 50) déplace la première découpe de pièce (5) dégagée par découpage et une unité de déplacement de pièce (9, 39) déplace la pièce restante (16, 49) et **en ce qu'**une unité de commande numérique (15, 45) est prévue, laquelle, lors du déplacement d'évacuation commun de la première découpe de pièce (5) dégagée par découpage et de la pièce restante (16, 49), commande le déplacement du dispositif de retenue (17, 50) et le déplacement de l'unité de déplacement de pièce (9, 39) de manière adaptée l'un à l'autre de telle sorte que la première découpe de pièce (5) dégagée par découpage maintient au moins presque la position relative par rapport à la pièce restante (16, 49) dans laquelle il est disposé avant le dégagement par découpage final.

12. Arrangement mécanisé selon la revendication 10 ou la revendication 11, **caractérisé en ce que** le dispositif de retenue (17, 50) du dispositif mécanisé pour l'évacuation de la première découpe de pièce (5) dégagée par découpage forme un dispositif de retenue commun pour la première découpe de pièce (5) et la deuxième découpe de pièce (5).

13. Arrangement mécanisé selon l'une des revendications 10 à 12, **caractérisé en ce qu'**un dispositif de retrait formé de préférence par le dispositif de retenue (17, 50) du dispositif mécanisé pour l'évacuation de la première découpe de pièce (5) dégagée par découpage est prévu, lequel retire au moins une découpe de pièce (5) dégagée par découpage de la pièce restante (16, 49).

14. Arrangement mécanisé selon l'une des revendications 10 à 13, **caractérisé en ce que** la ou les découpe (s) de pièce (5) dégagée(s) par découpage peut ou peuvent être fixée(s) au moyen du dispositif de retenue (17, 50) avec un jeu de déplacement existant dans un plan principal de la pièce (3) de type plaque par rapport à la pièce restante (16, 49).
